# EUROPEAN PATENT APPLICATION

(11) **EP 4 806 281 A1**
(43) Date of publication of application: **16.09.2026**
(21) Application number: 25223074.3
(22) Date of filing: 12.12.2025
(51) Int. Cl.: A24F 40/40, A24F 40/485, A24F 40/51, A24F 40/53

(54) **POWER SUPPLY AND HOUSING ASSEMBLY THEREOF, ATOMIZER AND HOUSING ASSEMBLY THEREOF, AND AEROSOL GENERATING DEVICE**

(30) Priority: 14.03.2025 CN 202520460750 U; 21.03.2025 CN 202520523201 U; 11.04.2025 CN 202510459234
(71) Applicant: Shenzhen Geekvape Technology Co., Ltd., Shenzhen, Guangdong 518102 (CN)
(72) Inventor: LIU, Hao, Shenzhen, 518102 (CN); LUO, Wen, Shenzhen, 518102 (CN); WANG, Qiang, Shenzhen, 518102 (CN); LU, Guoqiang, Shenzhen, 518102 (CN); WANG, Dongli, Shenzhen, 518102 (CN); CAO, Dong, Shenzhen, 518102 (CN)
(74) Representative: MERH-IP Matias Erny Reichl Hoffmann Patentanwälte PartG mbB

(57) **Abstract**

The present application provides a power supply (100) and a housing assembly (40) thereof, an atomizer (200) and a housing assembly (20) thereof and an aerosol generating device (1000), which relates to the field of aerosol generating devices. The housing assembly (40) of the power supply (100) includes a first connecting portion (41) and a first main body portion (42); a first receiving cavity (42a) is formed inside the first main body portion (42), the first receiving cavity (42a) is configured to receive a power supply assembly (60) and an airflow sensing assembly (50); the first connecting portion (41) is connected to the first main body portion (42), and the first connecting portion (41) is configured to rotatably connect to an atomizer (200); the first main body portion (42) is provided with an airflow channel (1a), one end of the airflow channel (1a) is configured to communicate with a sensing airflow channel (2a) of the atomizer (200), and another end of the airflow channel (1a) is located inside the first main body portion (42) and is configured to communicate with the airflow sensing assembly (50). When using the aerosol generating device (1000), during the user's inhalation process, the airflow in the airflow channel (1a) will flow to the sensing air passage (2a), triggering the airflow sensing assembly (50) inside the power supply (100) to make the aerosol generating device (1000) to work.

## Description

### TECHNICAL FIELD

The present application relates to the technical field of aerosol generating devices, and more particularly to a power supply and a housing assembly thereof, an atomizer and a housing assembly thereof and an aerosol generating device.

### BACKGROUND

Common aerosol generating devices include an atomizer and a power supply. The atomizer and power supply are detachably connected, allowing users to replace different atomizers as needed.

After the atomizer is connected to the power supply, the sensing air passage of the atomizer is connected to the airflow channel of the power supply. During inhalation, changes in air pressure inside the atomizer can affect the airflow in the airflow channel, thereby triggering the airflow sensing assembly in the power supply to control the normal operation of the aerosol generating device.

In some aerosol generating devices, the atomizer and power supply are rotatably connected, such as by a threaded connection. When connecting the atomizer to the power supply, special attention needs to be paid to the relative rotation angle between the atomizer and the power supply to ensure that the inlet of the sensing air passage is aligned with the outlet of the airflow channel, causing inconvenience for the user.

### SUMMARY

The present application provides a power supply and a housing assembly thereof, an atomizer and a housing assembly thereof, and an aerosol generating device, which facilitates user connection of the power supply and atomizer, so that the use of the aerosol generating device is more convenient. The technical solution is as follows:
In a first aspect, embodiments of the present application also provide a housing assembly of a power supply. The housing assembly includes a first connecting portion and a first main body portion, wherein a first receiving cavity is formed inside the first main body portion, the first receiving cavity is configured to receive a power supply assembly and an airflow sensing assembly;
the first connecting portion is connected to the first main body portion, and the first connecting portion is configured to rotatably connect to an atomizer;
the first main body portion is provided with an airflow channel, one end of the airflow channel is configured to communicate with a sensing airflow channel of the atomizer, and another end of the airflow channel is located inside the first main body portion and is configured to communicate with the airflow sensing assembly.

In some examples, the first main body portion is further provided with a first annular groove, the first annular groove is located on an end face of one end of the first main body portion, the first annular groove surrounds the first connecting portion, and one end of the airflow channel is located within the first annular groove; the first annular groove is configured to cooperate with an outer surface of the atomizer to form an annular cavity, the annular cavity communicates with the airflow channel and the sensing air passage of the atomizer.

In some examples, an outer surface of the first main body portion is provided with a first planar region, and the first annular groove is located within the first planar region.

In some examples, the first main body portion further includes at least one of the following:
a first sealing rib, located in the first planar region, arranged surrounding the first connecting portion, and located inside the first annular groove; and
a second sealing rib, located in the first planar region, arranged surrounding the first connecting portion, and located outside the first annular groove.

In some examples, the first connecting portion is provided with threads configured for connecting the atomizer.

In some examples, a difference between an annular width of the first annular groove and a diameter of the airflow channel does not exceed 1 mm.

In some examples, a diameter of the first annular groove is ranged from 10 mm to 20 mm.

In some examples, the first main body portion comprises a support frame and a cover plate, the cover plate is located on an outer surface of the support frame, and the first annular groove is located on a side of the cover plate away from the support frame.

In some examples, the first connecting portion is connected to the support frame, and the cover plate is provided with a first through hole exposing the first connecting portion.

In some examples, the first main body portion includes a support frame and a first sealing member, one side of the support frame is an opening, the first sealing member is connected to the support frame at the opening, the first connecting portion is connected to the support frame, the first sealing member is provided with a second through hole exposing the first connecting portion, the airflow channel is located on the first sealing member, and the first sealing member is configured to seal a connection between the second through hole and the atomizer, and to seal a connection between the airflow channel and the atomizer.

In some examples, the first annular groove is located on the side of the first sealing member away from the support frame.

In some examples, the first main body portion further includes a fixing member, the fixing member is disposed on a side of the first sealing member opposite to the first receiving cavity, the fixing member is provided with a third through hole exposing the second through hole.

In some examples, a side of the first sealing member facing the first receiving cavity is protruded with a sealing groove, the sealing groove is configured for accommodating an airflow sensing member in the airflow sensing assembly, and the airflow channel is disposed at a bottom of the sealing groove.

In a second aspect, embodiments of the present application also provide a power supply, including a power supply assembly, an airflow sensing assembly, and a housing assembly of any of the power supplies described in the first aspect. The power supply assembly and the airflow sensing assembly are located in a first receiving cavity of a first main body portion, and the airflow sensing assembly communicates with an airflow channel.

In some examples, the power supply assembly includes a first circuit board and a button switch, wherein the airflow sensing assembly and the button switch are electrically connected to the first circuit board, and the airflow sensing assembly and the button switch are respectively configured to control an atomizer to work.

In some examples, the first main body portion includes a support assembly and an outer bracket, the outer bracket is sleeved on the support assembly, the support assembly comprises a battery compartment, the airflow sensing assembly and the first connecting portion are both located outside the battery compartment and located at a same end of the battery compartment, the first circuit board is located outside the battery compartment and is located between an outer sidewall of the battery compartment and an inner sidewall of the outer bracket.

In some examples, the power supply further includes a support member, the support member is connected to one end of the battery compartment, and a side of the support member away from the battery compartment is provided with a mounting groove, and the airflow sensing assembly is disposed in the mounting groove.

In some examples, the power supply further includes an electrode sheet, and a side of the support member facing the battery compartment is provided with an abutment end, the abutment end is configured to abut the electrode sheet against a battery mounted in the battery compartment.

In some examples, the power supply further includes a first elastic member, one end of the first elastic member abuts against the abutment end, and another end of the first elastic member abuts against the electrode sheet, the first elastic member applies a spring force configured for pushing the electrode sheet away from the abutment end.

The present application also provides a power supply including a support frame, a battery, and an end cap assembly; the support frame is provided with a battery cavity; the battery is housed in the battery cavity; the end cap assembly includes a battery cover, a fixing seat, and a rotating shaft; the fixing seat is connected to the support frame; one side of the battery cover is provided with a first rotating hole, and the fixing seat is provided with a second rotating hole, the rotating shaft passes through the first rotating hole and the second rotating hole, allowing the battery cover to rotate relative to the support frame to close an opening of the battery cavity.

Based on the above features, the rotating shaft of the power supply passes through the first rotating hole in the battery cover and the second rotating hole in the mounting base. The battery cover can rotate relative to the support frame, thereby opening and closing the battery cavity. The rotating shaft passing through both the first rotating hole and the second rotating hole, provides high assembly precision, improves the mounting accuracy of the rotating shaft, reduces the risk of the battery cover tilting relative to the support frame, and enhances the sealing performance between the battery cover and the support frame, thus improving the sealing performance of the power supply.

Optionally, the battery cover is provided with a third connecting portion, the first rotating hole passes through the third connecting portion, the mounting base is provided with two fourth connecting portions spaced apart from each other, the two fourth connecting portions are respectively provided with a second rotating hole, the third connecting portion is located between the two fourth connecting portions, and both ends of the rotating shaft respectively pass through the second rotating holes of the two fourth connecting portions; and at least one second rotating hole passes through a corresponding fourth connecting portion.

Optionally, the end cap assembly also includes a locking mechanism; when the battery cover is closed, the locking mechanism locks the battery cover to the support frame.

Optionally, the support frame is provided with a locking groove, and the locking mechanism includes a locking tongue and a second elastic member; the locking tongue is slidably connected to the battery cover, and the second elastic member is connected between the support frame and the locking tongue, and the second elastic member is used to push the locking tongue into the locking groove to lock the battery cover and the support frame.

Optionally, the mounting base and the support frame are engaged.

Optionally, the support frame further provides a second receiving cavity communicating with the battery cavity, a stepped surface is formed between the second receiving cavity and the battery cavity, at least a portion of the end cap assembly is received in the second receiving cavity, an inner wall of the second receiving cavity having a first engaging protrusion, and the mounting base is provided with a first engagement groove for engaging with the first engaging protrusion; or, the inner wall of the second receiving cavity is provided with a first engagement groove, and the mounting base is provided with a first engaging protrusion for engaging with the first engagement groove.

Optionally, the support frame includes a spring tongue, one end of the spring tongue is provided with a second engaging protrusion protruding from the stepped surface, and the mounting base is provided with a second engagement groove for engaging with the second engaging protrusion.

Optionally, the end cap assembly further includes a second sealing member, the second sealing member is mounted on the battery cover, the second sealing member is used to be clamped between the stepped surface and the battery cover, a side of the second sealing member facing the stepped surface is provided with a sealing protrusion, the sealing protrusion is used to abut against the stepped surface and surround a periphery of the opening of the battery cavity.

Optionally, the mounting base is fixed to the support frame by a fastener.

In a third aspect, embodiments of the present application provide a housing assembly of an atomizer, the housing assembly including a second connecting portion and a second main body portion for accommodating an atomizing assembly;
the second connecting portion is connected to the second main body portion and is configured to rotatably connect to a power source; and
the second main body portion is provided with a sensing air passage, one end of the sensing air passage is configured to communicate with an airflow sensing assembly through an airflow channel of the power source, and another end of the sensing air passage is located inside the second main body portion and is communicated with a nozzle.

In some examples, an outer surface of the second main body portion is further provided with a second annular groove, the second annular groove is located on an end face of one end of the second main body portion, the second annular groove surrounds the second connecting portion, one end of the sensing air passage is located in the second annular groove, the second annular groove is configured to cooperate with an outer surface of the power supply to form an annular cavity, and the annular cavity communicates the sensing air passage and the airflow passage of the power supply.

In some examples, an outer surface of the second main body portion is provided with a second planar region, and the second annular groove is located in the second planar region.

In some examples, the second body portion further includes at least one of the following:
a third sealing rib, located in the second planar region, arranged surrounding the second connecting portion, and located inside the second annular groove; and
a fourth sealing rib, located in the second planar region, arranged surrounding the second connecting portion, and located outside the second annular groove.

In some examples, the second connecting portion is provided with threads configured for connecting the power supply.

In some examples, a difference between an annular width of the second annular groove and a diameter of the sensing air passage does not exceed 1 mm.

In some examples, a diameter of the second annular groove is ranged from 10 mm to 20 mm.

In some examples, the second main body portion includes a first cover, a second cover, and a liquid reservoir housing, wherein the first cover is located at one end of the liquid reservoir housing, and the second cover is located at another end of the liquid reservoir housing; the second annular groove is located on a side of the first cover away from the liquid reservoir housing, and the second cover is configured to connect a nozzle.

In some examples, a side of the first cover adjacent to the liquid reservoir housing is provided with a protrusion post, and an end of the sensing air passage away from the second annular groove is located at an end portion of the protrusion post.

In some examples, the housing assembly further includes a bracket, a portion of the bracket is located within the liquid reservoir housing, and another portion of the bracket is located between the liquid reservoir housing and the second cover;
the bracket is provided with an atomizing channel and a main air passage, an inlet of the atomizing channel is arranged adjacent to the first cover and communicated with the sensing air passage, and an outlet of the atomizing channel is arranged adjacent to the second cover; and
an inlet of the main air passage is located on an outer surface of a portion of the bracket exposed between the liquid reservoir housing and the second cover, and an outlet of the main air passage communicates with the inlet of the atomizing channel.

In a fourth aspect, embodiments of the present application also provide an atomizer, the atomizer including an atomizing assembly and a housing assembly as described in the third aspect, the atomizing assembly is located within a second main body portion.

In a fifth aspect, embodiments of the present application also provide an aerosol generating device, including an atomizer and a power supply for supplying power to the atomizer; the aerosol generating device satisfies at least one of the following:
the power supply is the power supply described in the second aspect; and
the atomizer is the atomizer described in the fourth aspect.

The beneficial effects of the technical solution provided by embodiments of the present application include at least the following:
By configuring the housing assembly of the power supply to include the first connecting portion and the first main body portion, the first annular groove and the airflow channel are provided in the first main body portion, and one end of the airflow channel is located within the first annular groove, when the power supply is connected to the atomizer through the first connecting portion, the first annular groove can form an annular cavity with the outer surface of the atomizer. This annular cavity communicates with the sensing air passage of the atomizer, thus enabling the airflow channel to communicate with the sensing air passage of the atomizer through the annular cavity. Since the first annular groove surrounds the first connecting portion, even if the relative rotation angle between the atomizer and the power supply is different during each connection process, the annular cavity formed by the first annular groove and the outer surface of the atomizer can always communicate with the airflow channel and the sensing air passage. Users do not need to pay attention to the relative rotation angle between the atomizer and the power supply when connecting the atomizer and the power source, so that the connection of the atomizer and power supply is more convenient and the use of the aerosol generating device is more convenient.

### BRIEF DESCRIPTION OF THE DRAWINGS

In order to more clearly illustrate the technical solutions in the embodiments of the present application, the drawings used in the description of the embodiments or prior art will be briefly introduced below. Obviously, the drawings described below are only some embodiments of the present application. For those skilled in the art, other drawings can be obtained based on these drawings without creative effort.
FIG. 1 is a structural schematic diagram of an aerosol generating device provided in an embodiment of the present application;
FIG. 2 is an enlarged schematic diagram of the connection between a power supply and an atomizer provided in an embodiment of the present application;
FIG. 3 is a structural schematic diagram of a housing assembly of a power supply provided in an embodiment of the present application;
FIG. 4 is an exploded structural schematic diagram of a housing assembly provided in an embodiment of the present application;
FIG. 5 is a structural schematic diagram of a cover plate provided in an embodiment of the present application;
FIG. 6 is a cross-sectional view of a cover plate provided in an embodiment of the present application;
FIG. 7 is a schematic diagram of an internal structure of a power supply provided in an embodiment of the present application;
FIG. 8 is a schematic diagram of an external structure of a power supply provided in an embodiment of the present application;
FIG. 9 is a cross-sectional view of the power supply in FIG. 8;
FIG. 10 is a structural schematic diagram of a support member provided in an embodiment of the present application;
FIG. 11 is a structural schematic diagram of a sealing member provided in an embodiment of the present application;
FIG. 12 is a schematic diagram of an external structure of yet another power supply provided in an embodiment of the present application;
FIG. 13 is an exploded schematic diagram of the power supply shown in FIG. 12;
FIG. 14 is an exploded schematic diagram of the end cap assembly in FIG. 13;
FIG. 15 is a structural schematic diagram of the power supply shown in FIG. 12;
FIG. 16 is a sectional view along line A-A in FIG. 15;
FIG. 17 is an exploded view of the battery cover in FIG. 14;
FIG. 18 is an exploded view of the power supply shown in FIG. 12 with the battery cover being opened;
FIG. 19 is a structural schematic diagram of the fixing seat in FIG. 18;
FIG. 20 is a structural schematic diagram of the support frame in FIG. 18;
FIG. 21 is a structural schematic diagram of a housing assembly of an atomizer provided in an embodiment of the present application;
FIG. 22 is a partial structural schematic diagram of a housing assembly of an atomizer provided in an embodiment of the present application;
FIG. 23 is a structural schematic diagram of a first cover provided in an embodiment of the present application;
FIG. 24 is a partial cross-sectional view of a second main body portion provided in an embodiment of the present application;
FIG. 25 is a schematic diagram of an internal structure of a housing assembly of an atomizer provided in a first embodiment of the present application;
FIG. 26 is a schematic diagram of an internal structure of a housing assembly of an atomizer provided in a second embodiment of the present application;
FIG. 27 is a schematic diagram of an internal structure of an atomizer provided in an embodiment of the present application;
FIG. 28 is a schematic diagram of an internal structure of an atomizer provided in an embodiment of the present application;
FIG. 29 is a structural schematic diagram of an aerosol generating device provided in an embodiment of the present application;
FIG. 30 is a structural schematic diagram of yet another aerosol generating device provided in an embodiment of the present application;
FIG.31 is a cross-sectional view of the aerosol generating device shown in FIG. 30; and
FIG. 32 is an exploded structural schematic diagram of the aerosol generating device shown in FIG. 30.

### Reference numerals are listed as following:

100-power supply; 1000-aerosol generating device; 1001-recessed portion; 1002-annular engagement groove; 1a-airflow channel; 114-first mounting cavity; 115-second mounting cavity; 130-electrode sheet; 160-support assembly; 161-battery compartment; 1611-mounting groove; 162-support member; 1621-support plate; 1622-abutment plate; 1623-abutment end; 163-outer bracket; 180-first elastic member;
200-atomizer; 2001-protrusion portion; 2002-annular rib; 2a-sensing air passage; 20-atomizer housing assembly; 21-second connecting portion; 22-second main body portion; 20a-second annular groove; 20b-second planar region; 220-atomizing chamber; 221-first cover; 2211-third sealing rib; 2212-fourth sealing rib; 2213-protrusion post; 222-second cover; 223-liquid reservoir housing; 224-bracket; 2241-first bracket; 2242-second bracket; 224a-atomizing channel; 224b-main air passage; 225-air regulating ring; 225a-flow regulating hole;
300-nozzle; 30-atomizing assembly; 31-outer cover; 32-tubular bracket; 33-liquid guiding member; 34-first electrode; 35-second electrode; 36-first insulating pad; 37-transition electrode; 38-second insulating pad;
40-power supply housing assembly; 40a-first annular groove; 40b-first planar region; 41-first connecting portion; 42-first main body portion; 42a-first receiving cavity; 42b-second through hole; 421-cover plate; 4211-first sealing rib; 4212-second sealing rib; 421a-first through hole; 422-support frame; 423-first sealing member; 4231-sealing groove; 424-fixing member; 424a - third through hole; 43 - dust cover; 13 - end cap assembly; 45 - key cap;
50 -airflow sensing assembly; 51 - sealing cover;
60 -power supply assembly; 61 - battery; 62 - first circuit board; 621 - button switch; 63 - third electrode; 64 - fourth electrode; 65 - display panel;
111 -battery cavity; 112 - locking groove; 113 - second receiving cavity; 1131 - first engaging protrusion; 116 - stepped surface; 1161 -partition plate; 1162 -avoidance hole; 1163 -skin cover; 117 - spring tongue; 1171 - second engaging protrusion; 1301 - adhesive layer; 131 - battery cover; 1311 - first rotating hole; 1312 - third connecting portion; 1313 - third cover; 13131 - through hole; 1314 - fourth cover body; 13141 - guide groove; 1315 - receiving cavity; 132 - fixing seat; 1321 - second rotating hole; 1322 - fourth connecting portion; 1323 - middle portion; 1324 -first engagement groove; 1325 -second engagement groove; 133 -rotating shaft; 134 -locking mechanism; 1341 -locking tongue; 1342 -second elastic member; 1343 -sliding button; 135 -second sealing member; 1351 -sealing protrusion; 136 - third elastic member; 137 -electrical connector; 142 -interface; 16 -fastener.

### DETAILED DESCRIPTION OF THE EMBODIMENTS

In the following description, specific details such as particular system structures and techniques are set forth for illustrative purposes and not for limitation, in order to provide a thorough understanding of the embodiments of the present application. However, those skilled in the art will understand that the present application may also be implemented in other embodiments without these specific details. In other instances, detailed descriptions of well-known systems, apparatuses, circuits, and methods are omitted so as not to obscure the description of the present application with unnecessary detail.

It should also be understood that the term "and/or" as used in this specification and the appended claims refers to any combination and all possible combinations of one or more of the associated listed items, and includes such combinations.

It should be noted that when an element is referred to as being "fixed to" or "disposed on" another element, it may be directly or indirectly on the other element. When an element is referred to as being "connected to" another element, it may be directly connected to the other element or indirectly connected to the other element.

It should be understood that the terms "length," "width," "upper," "lower," "front," "rear," "left," "right," "vertical," "horizontal," "top," "bottom," "inner," and "outer," etc., indicating orientation or positional relationships based on the orientation or positional relationships shown in the accompanying drawings, are only for the convenience of describing the present application and simplifying the description, and do not indicate or imply that the device or element referred to must have a specific orientation, or be constructed and operated in a specific orientation, and therefore should not be construed as a limitation on the present application.

Furthermore, in the description of the present application and the appended claims, the terms "first," "second," "third," etc., are only used to distinguish descriptions and should not be construed as indicating or implying relative importance.

The references to "one embodiment" or "some embodiments" described in the present application mean that one or more embodiments of the present application include the specific features, structures, or characteristics described in connection with that embodiment. Therefore, the phrases "in one embodiment," "in some embodiments," "in other embodiments," "in still other embodiments," etc., appearing in different parts of this specification do not necessarily refer to the same embodiment, but rather mean "one or more, but not all, embodiments," unless otherwise specifically emphasized. The terms "including," "comprising," "having," and variations thereof all mean "including, but not limited to," unless otherwise specifically emphasized. "Multiple" means two or more.

An aerosol generating device 1000 typically includes an atomizer 200 and a power supply 100. The heating element of the atomizer 200 is powered by the power supply 100 to heat the aerosol matrix within the atomizer 200, thereby generating an aerosol for the user to inhale.

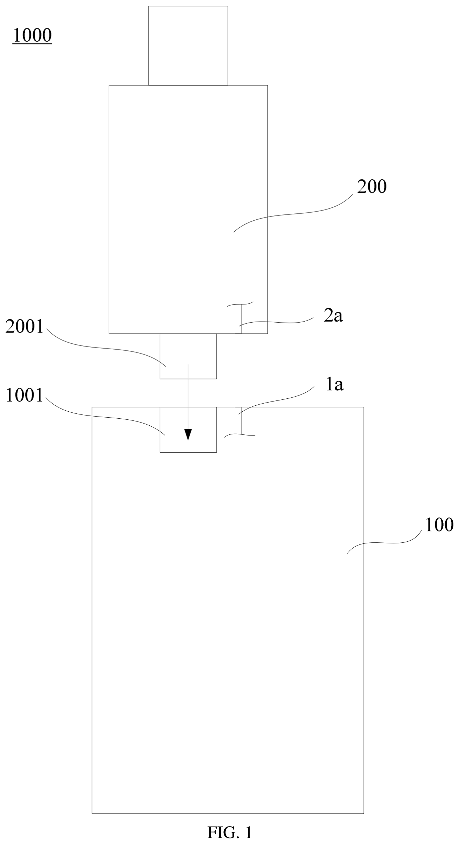

FIG. 1 is a schematic diagram of an aerosol generating device according to an embodiment of the present application. As shown in FIG. 1, the aerosol generating device 1000 includes a power supply 100 and an atomizer 200. The power supply 100 is provided with a recessed portion 1001, and the atomizer 2000 has a protrusion portion 2001, which is inserted into the recessed portion 1001. The power supply 100 supplies power to the atomizer 200.

In some small aerosol generating devices 1000, the power supply 100 and the atomizer 200 are relatively small in size and weight. The power supply 100 and the atomizer 200 are usually connected magnetically for ease of use. In some large aerosol generating devices 1000, the power supply 100 and atomizer 200 are relatively large and heavy, making it difficult to stably connect them using magnetic attraction. Therefore, a rotating connection is typically used. For example, the inner wall of the recessed portion 1001 is provided with internal threads, and the outer wall of the protrusion portion 2001 is provided with external threads, the power supply 100 the atomizer 200 are connected together through a threaded connection.

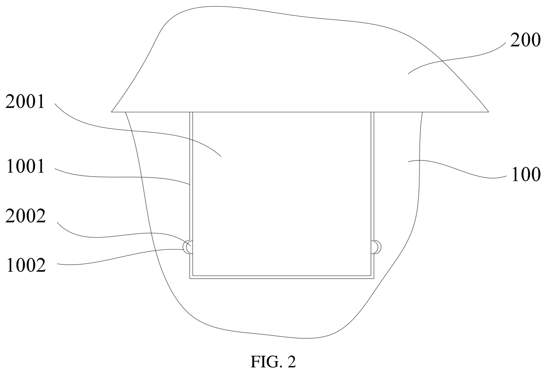

As another example, FIG. 2 is an enlarged schematic diagram of the connection between the power supply and the atomizer according to an embodiment of the present application. As shown in FIG. 2, the outer wall of the protrusion portion 2001 is formed with an annular rib 2002, and the inner wall of the recessed portion 1001 is formed with an annular engagement groove 1002. The protrusion portion 2001 is inserted into the recessed portion 1001, and the annular rib 2002 is engaged in the annular engagement groove 1002, allowing the power supply 100 and the atomizer 200 to rotate relative to each other while remaining connected.

As shown in FIG. 1, the atomizer 200 is further provided with a sensing air passage 2a, the inlet of the sensing air passage 2a is located at the end of the atomizer 200. During inhalation through the nozzle 300 by the user, airflow enters through the inlet of the sensing air passage 2a. The power supply 100 is provided with an airflow channel 1a, the outlet of the airflow channel 1a is located at the end of the power supply 100. When the atomizer 200 is connected to the power supply 100, the inlet of the sensing air passage 2a must be aligned with the outlet of the airflow channel 1a. During inhalation by the user, the airflow in the airflow channel 1a flows to the sensing air passage 2a, triggering the airflow sensing assembly inside the power supply 100, thus activating the aerosol generating device 1000 to work.

During the connection process between the atomizer 200 and the power supply 100, the user often needs to pay special attention to the relative rotation angle between the two to ensure that the outlet of the sensing air passage 2a of the atomizer 200 is aligned with the outlet of the airflow channel 1a of the power supply 100. This makes the connection process between the atomizer 200 and the power supply 100 somewhat cumbersome, which affects the ease of use of the aerosol generating device 1000.

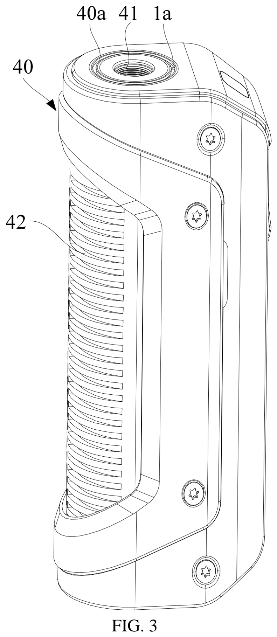

FIG. 3 is a schematic structural diagram of a housing assembly of a power supply according to an embodiment of the present application. As shown in FIG. 3, the housing assembly 40 of the power supply 100 includes a first connecting portion 41 and a first main body portion 42. A first receiving cavity 42a is formed inside the first main body portion 42, which is used to accommodate a power supply assembly 60 and an airflow sensing assembly 50.

The first connecting portion 41 is connected to the first main body portion 42 and is rotatably connected to the atomizer 200.

The first main body portion 42 is provided with an airflow channel 1a. One end of the airflow channel 1a communicates with the sensing airflow channel 2a of the atomizer 200, and another end of the airflow channel 1a is located inside the first main body portion 42 and communicates with the airflow sensing assembly 50.

By providing the airflow channel 1a and the first receiving cavity 42a accommodating the airflow sensing assembly 50 within the housing assembly 40 of the power supply 100, during the user's inhalation process when using the aerosol generating device 1000, the airflow within the airflow channel 1a flows to the sensing air passage 2a, triggering the airflow sensing assembly 50 inside the power supply 100, thus activating the aerosol generating device 1000 to work.

In this example, the outer surface of the first main body portion 42 is provided with a first annular groove 40a surrounding the first connecting portion 41. For example, the first annular groove 40a can be coaxially arranged with the first connecting portion 41. The first annular groove 40a is used to mate with the outer surface of the atomizer 200, so as to form an annular cavity communicating with the sensing air passage 2a of the atomizer 200.

One end of the airflow channel 1a is located within the first annular groove 40a, and another end of the airflow channel 1a is located inside the first main body portion 42 and is communicated with the airflow sensing assembly 50.

By configuring the housing assembly 40 of the power supply 100 to include the first connecting portion 41 and the first main body portion 42, and the first annular groove 40a and the airflow channel 1a are provided in the first main body portion 42, and one end of the airflow channel 1a is located within the first annular groove 40a, when the power supply 100 is connected to the atomizer 200 through the first connecting portion 41, the first annular groove 40a can form an annular cavity with the outer surface of the atomizer 200. This annular cavity connects to the sensing air passage 2a of the atomizer 200, thus allowing the airflow channel 1a to connect with the sensing air passage 2a of the atomizer 200 through the annular cavity. The first annular groove 40a surrounds the first connecting portion 41, when rotatably connected to the atomizer 200 through the first connecting portion 41, even if the relative rotation angle between the atomizer 200 and the power supply 100 differs by any angle between 0° and 360° during each connection process, the annular cavity formed by the first annular groove 40a and the outer surface of the atomizer 200 can always connect the airflow channel 1a and the sensing air passage 2a. When the atomizer 200 and the power supply 100 are connected, the user does not need to consider the relative rotation angle between the atomizer 200 and the power supply 100, the connection between the atomizer 200 and the power supply 100 is easier and the aerosol generating device 1000 is more convenient to use.

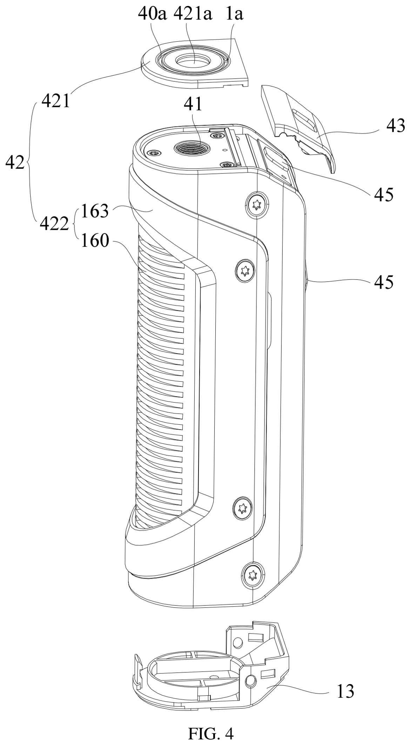

FIG. 4 is an exploded structural diagram of a housing assembly provided in an embodiment of the present application. As shown in FIG. 4, in some examples, the first main body portion 42 includes a support frame 422 and a cover plate 421. The cover plate 421 is located on the outer surface of the support frame 422. The first annular groove 40a is located on the side of the cover plate 421 away from the support frame 422.

The support frame 422 may include a support assembly 160 and an outer bracket 163, and the outer bracket 163 is sleeved on the support assembly 160.

The support frame 422 is used to accommodate the power supply assembly 60, providing a mounting base for the power supply assembly 60. The cover plate 421 is arranged on the outer surface of the support frame 422, providing a shield to prevent external dust and liquids from entering the support frame 422. Different power supplies 100 may have different external structures, but the support frame 422 can adopt the same structure, thus only requiring different cover plates 421 to reduce production costs. When the power supply 100 is connected to the atomizer 200, the cover plate 421 contacts the atomizer 200. By using a separate cover plate 421 also facilitates processing of the cover plate 421, ensuring a better fit between the cover plate 421 and the atomizer 200.

As shown in FIG. 4, the housing assembly 40 may also include a dust cover 43 and an end cap assembly 13, and the dust cover 43 and the end cap assembly 13 can be respectively mounted on the support frame 422.

The housing assembly 40 of the power supply 100 may also include a key cap 45, which can be exposed for facilitating the operation of the user.

In some examples, the first connecting portion 41 can be a threaded structure with threads for connecting the atomizer 200.

Using a threaded connection to connect the atomizer 200 makes the connection between the atomizer 200 and the power supply 100 more secure.

The first connecting portion 41 can be cylindrical, for example, it can be a cylindrical tubular structure. The threads can be located on the inner wall (i.e., the first connecting portion 41 has internal threads) or the outer wall (i.e., the first connecting portion 41 has external threads).

As an example, as shown in FIG. 4, the first connecting portion 41 is connected to the support frame 422, and the cover plate 421 is provided with a first through hole 421a exposing the first connecting portion 41.

When the power supply 100 is connected to the atomizer 200, a portion of the atomizer 200 can be connected to the first connecting portion 41 through the first through hole 421a of the cover plate 421. The first connecting portion 41 is connected to the support frame 422, and it is not necessary to disassemble the first connecting portion 41 when replacing the cover plate 421.

Exemplarily, the first connecting portion 41 is located on the side of the cover plate 421 adjacent to the support frame 422. The first connecting portion 41 has internal threads. When the atomizer 200 is connected to the power supply 100, a portion of the atomizer 200 can be inserted into the first connecting portion 41 and connected to the first connecting portion 41 through threads.

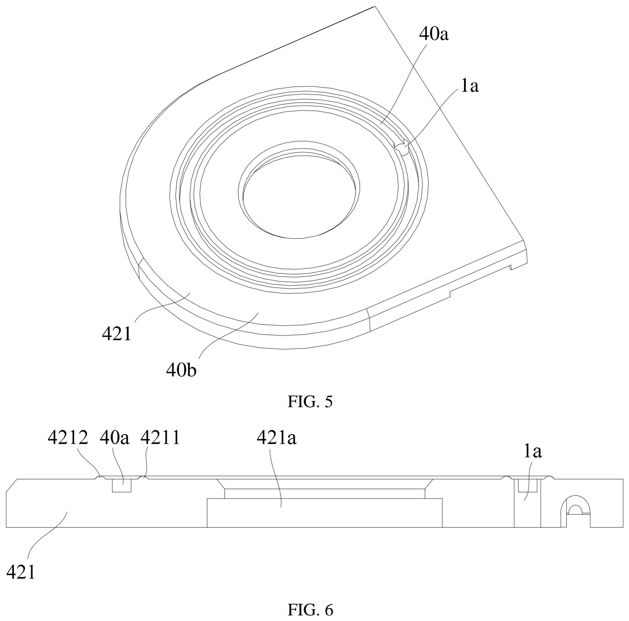

FIG. 5 is a schematic structural diagram of a cover plate provided in an embodiment of the present application. As shown in FIG. 5, the outer surface of the first main body portion 42 is provided with a first planar region 40b, and a first annular groove 40a is located in the first planar region 40b.

In this example, the first planar region 40b includes the surface of the cover plate 421 away from the support frame 422.

By setting the surface of the cover plate 421 away from the support frame 422 as a plane, the cover plate 421 can better fit the outer surface of the atomizer 200 when connecting the atomizer 200 and the power supply 100. The first annular groove 40a and the outer surface of the atomizer 200 form an annular cavity with better airtightness, allowing for more accurate triggering of the airflow sensing assembly in the power supply 100 during the use of the aerosol generating device 1000.

As shown in FIG. 5, the first annular groove 40a is circular, and the diameter of the first annular groove 40a can be 10mm to 20mm.

The diameter of the first annular groove 40a can refer to one of the following: the diameter of the inner side wall of the first annular groove 40a, the diameter of the outer side wall of the first annular groove 40a, or the average of the diameters of the inner and outer side walls of the first annular groove 40a. The inner side wall of the first annular groove 40a is the side wall of the first annular groove 40a adjacent to the first connecting portion 41, and the outer side wall is the side wall away from the first connecting portion 41.

The larger the diameter of the first annular groove 40a, the longer the inner and outer side edges of the first annular groove 40a, the higher the risk of leakage in the formed annular cavity when the atomizer 200 is connected to the power supply 100. The diameter of the first annular groove 40a being set to 10mm~20mm reduces the risk of leakage in the annular cavity and provides sufficient space inside the first annular groove 40a to accommodate the first connecting portion 41, which avoids any limitation on the size of the first connecting portion 41 that could affect the structural strength of the first connecting portion 41.

In some examples, the diameter of the first annular groove 40a can be 13mm~17mm. For example, the diameter of the first annular groove 40a can be 15mm.

In some examples, the difference between the annular width of the first annular groove 40a and the diameter of the airflow channel 1a does not exceed 1mm.

The annular width of the first annular groove 40a refers to the difference between the radius of the outer side wall and the inner side wall of the first annular groove 40a. The diameter of the airflow channel 1a can refer to the diameter of one end of the airflow channel 1a located within the first annular groove 40a, i.e., the diameter of the outlet of the airflow channel 1a.

The annular width of the first annular groove 40a is set to be not significantly different from the diameter of the airflow channel 1a, within 1 mm, can prevent the volume of the annular cavity formed when the atomizer 200 is connected to the power supply 100 from being too large. With a fixed diameter of the first annular groove 40a, a larger annular width results in a larger volume of the annular cavity formed when the atomizer 200 is connected to the power supply 100, which may affect the sensitivity of the airflow sensing assembly.

Exemplarily, the annular width of the first annular groove 40a can be the same as the diameter of the airflow channel 1a.

FIG. 6 is a cross-sectional view of a cover plate provided in an embodiment of the present application. As shown in FIG. 6, the first main body portion 42 may further include a first sealing rib 4211 and a second sealing rib 4212.

The first sealing rib 4211 is located in the first planar region 40b and is arranged surrounding the first connecting portion 41. The first sealing rib 4211 is located inside the first annular groove 40a. The second sealing rib 4212 is located in the first planar region 40b and is arranged surrounding the first connecting portion 41. The second sealing rib 4212 is located outside the first annular groove 40a.

When the atomizer 200 and the power supply 100 are connected, the first sealing rib 4211 and the second sealing rib 4212 can respectively compress the outer surface of the power supply 100, thereby improving the airtightness of the inner and outer sides of the first annular groove 40a, so that the first annular groove 40a and the outer surface of the power supply 100 form an annular cavity with better airtightness.

In some other possible implementations, the surface of the cover plate 421 may only be provided with the first sealing rib 4211 or only with the second sealing rib 4212 to reduce manufacturing costs.

The embodiment of the present application further provides a power supply 100 for supplying power to components, such as the atomizer 200, a suction device, etc. For ease of explanation, the following description uses the power supply 100 supplying power to the atomizer 200 as an example.

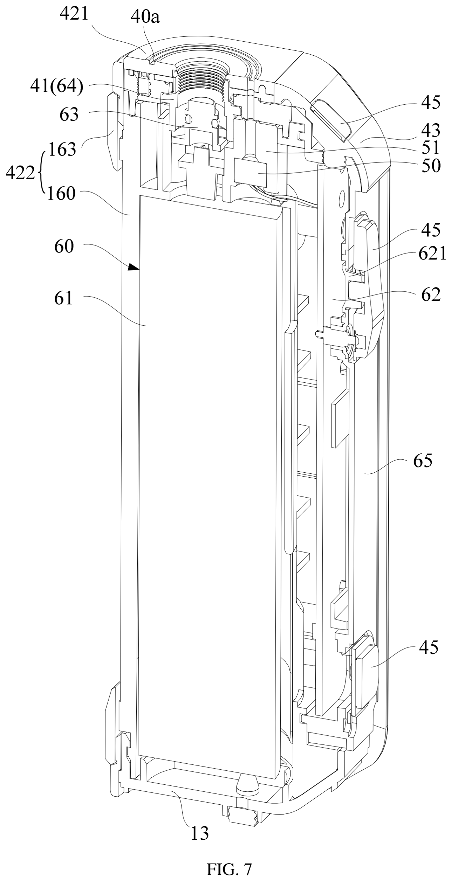

FIG. 7 is a schematic diagram of the internal structure of a power supply provided in an embodiment of the present application. As shown in FIG. 7, the power supply includes a power supply assembly 60, an airflow sensing assembly 50, and a housing assembly as shown in FIGS. 1-6. The power supply assembly 60 and the airflow sensing assembly 50 are located within the first main body portion 42, and the airflow sensing assembly 50 is connected to the airflow channel 1a.

When the atomizer 200 is connected to the power supply 100, even if the relative rotation angle between the atomizer 200 and the power supply 100 varies with each connection (0° to 360°), the annular cavity formed by the first annular groove 40a and the outer surface of the atomizer 200 will always maintain communication with the airflow channel 1a and the sensing air passage 2a. Users do not need to pay attention to the relative rotation angle between the atomizer 200 and the power supply 100 when the atomizer 200 and the power supply 100 are connected, so that the users are easier to connect the atomizer 200 and the power supply 100 and the aerosol generating device 1000 is more convenient to use.

As shown in FIG. 7, the power supply assembly 60 may include a battery 61, a first circuit board 62, a third electrode 63, and a fourth electrode 64. The battery 61 and the first circuit board 62 may be mounted in the support frame 422, respectively. The airflow sensing assembly 50, the third electrode 63, and the fourth electrode 64 may be located on the side of the battery 61 adjacent to the cover plate 421. The airflow sensing assembly 50, the third electrode 63, and the fourth electrode 64 may be connected to the first circuit board 62. For example, the airflow sensing assembly 50 may be connected to the first circuit board 62 through a wire.

Exemplarily, the airflow sensing assembly 50 may include an airflow sensing member. The airflow sensing member is connected to the first circuit board 62 through a wire.

A button switch 621 can be connected to the side of the first circuit board 62 away from the battery 61. The button switch 621 can be connected to the key cap 45.

Exemplarily, the third electrode 63 can be cylindrical and coaxially arranged with the first connecting portion 41.

As an example, the third electrode 63 can be a spring-loaded pin, one end of the spring-loaded pin is electrically connected to the first circuit board 62, and another end of the spring-loaded pin is used to connect to the first electrode 34 of the atomizer 200.

The fourth electrode 64 can be located on the inner wall of the first connecting portion 41. Exemplarily, the fourth electrode 64 can be a conductive layer formed on the inner wall of the first connecting portion 41, for example, a metal plating.

In some possible implementations, the first connecting portion 41 can be a conductive member, for example, a metal member, and the fourth electrode 64 can have the same structure as the first connecting portion 41, that is, the first connecting portion 41 is reused as the fourth electrode 64.

The airflow sensing assembly 50 can be arranged facing the inlet of the airflow channel 1a. Exemplarily, the power supply 100 may further include a sealing cover 51 sleeved over the airflow sensing assembly 50. The sealing cover 51 is provided with an air guide channel, one end of the air guide channel communicates with the inlet of the airflow channel 1a, and another end of the air guide channel faces the airflow sensing assembly 50.

As shown in FIG. 7, the power supply 100 may further include a display panel 65, located on the side of the first circuit board 62 away from the battery 61, and electrically connected to the first circuit board 62.

The display panel 65 is arranged on one side of the first circuit board 62, so that the display panel 65 and the first circuit board 62 are arranged in a parallel or approximate parallel manner, saves space and makes the structure of the power supply 100 more compact.

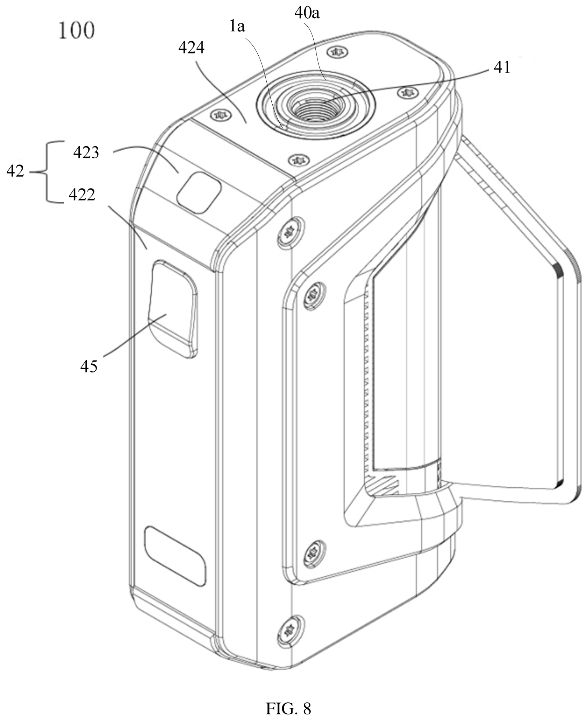

The embodiment provides a power supply 100 for an aerosol generating device 1000. As shown in FIGS. 8-11, the power supply 100 includes a power supply assembly 60, an airflow sensing assembly 50, and a power supply housing assembly.

The housing assembly of the power supply 100 includes a first connecting portion 41 and a first main body portion 42. A first receiving cavity 42a is provided inside the first main body portion 42, the first receiving cavity 42a is used to accommodate the power supply assembly 60.

The first receiving cavity 42a may be cylindrical as a whole, which is provided with a first end and a second end opposite to each other. The first end of the first receiving cavity 42a is provided with a second through hole 42b and an airflow channel 1a. The first connecting portion 41 is disposed in the second through hole 42b. The first connecting portion 41 may be a threaded structure, the threaded structure is used for screwing into the atomizer 200. A first circuit board 62 is disposed in the first receiving cavity 42a and is electrically connected to the atomizer 200 through the second through hole 42b.

The power supply assembly 60 may include the first circuit board 62, a battery 61, and a button switch 621. The airflow sensing assembly 50 and the button switch 621 are electrically connected to the first circuit board 62. The airflow sensing assembly 50 and the button switch 621 are used to control the operation of the atomizer 200.

The housing assembly of the power supply 100 may further include a key cap 45, which is connected to a button switch 621.

A battery 61 is disposed in the first receiving cavity 42a and electrically connected to the first circuit board 62. The battery 61 supplies power to the atomizer 200. An airflow sensing assembly 50 is disposed in the first receiving cavity 42a and electrically connected to the first circuit board 62. One end of the airflow channel 1a communicates with the airflow sensing assembly 50, and the other end of the airflow channel 1a communicates with the main airflow channel 224b of the atomizer 200. The button switch 621 is disposed in and electrically connected to the first circuit board 62. A portion of the key cap 45 connected to the button switch 621 protrudes from the first main body portion 42. The button switch 621 and the airflow sensing assembly 50 are used to control the operating state of the atomizer 200.

By simultaneously providing the airflow sensing assembly 50 and the button switch 621 within the power supply 100, the airflow sensing assembly 50 and the button switch 621 are used to control the operating state of the atomizer 200. Even if one of the structures of the airflow sensing assembly 50 and the button switch 621 fails, the another structure of the airflow sensing assembly 50 and the button switch 621 can still activate the atomizer 200 for heating, and the user experience is improved.

In some possible implementations, the power supply 100 can also control the operating state of the atomizer 200 through the airflow sensing assembly 50, without including the button switch 621.

Additionally, in this embodiment, the power supply assembly 60 may include two batteries 61. By providing at least two batteries 61 within the power supply 100 and connected in series, the output power of the power supply 100 can be increased, which provides a prerequisite for increasing the atomizing amount of the aerosol generating device 1000. In other embodiments, a battery 61 with higher output power can also be used to power the atomizer 200.

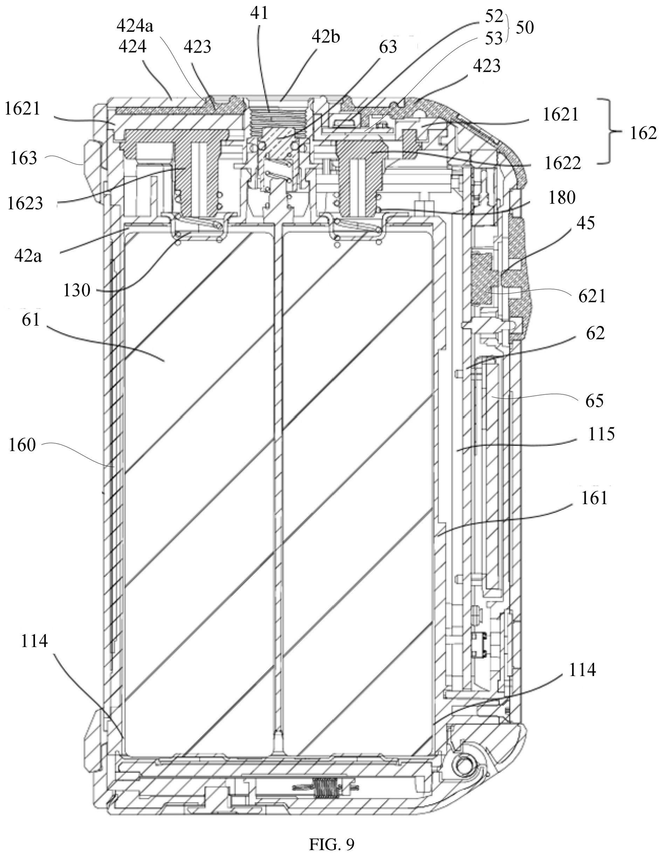

As shown in FIGS. 8 and 9, the first main body portion 42 includes a support frame 422 and a first sealing member 423. One side of the support frame 422 is an opening. The first sealing member 423 is connected to the support frame 422 through the opening. The second through hole 42b and the airflow channel 1a are located on the first sealing member 423. The first sealing member 423 is used to seal the connection between the second through hole 42b and the atomizer 200, and to seal the connection between the airflow channel 1a and the atomizer 200.

The first connecting portion 41 is connected to the support frame 422. The first annular groove 40a is located on the side of the first sealing member 423 away from the support frame 422. The first sealing member 423 is provided with a second through hole 42b exposing the first connecting portion 41.

The airflow sensing assembly 50 is disposed in the power supply 100. The pressure change caused by the suction action of the atomizer 200 needs to act on the airflow sensing assembly 50 in the aerosol generating device 1000. Good airtightness is required between the atomizer 200 and the power supply 100. The present application achieves good airtightness and reduces air leakage by sealing the connection between the atomizer 200 and the power supply 100 with the first sealing member 423.

The support frame 422 includes a support assembly 160 and an outer bracket 163, and the outer bracket 163 is sleeved on the support assembly 160. At least a portion of the support assembly 160 is disposed near the first end. The side of the support assembly 160 facing the first end is provided with a mounting groove 1611, and the airflow sensing assembly 50 is disposed within the mounting groove 1611.

The present application shortens the air path of the airflow sensing assembly 50 and reduces its response time by placing a portion of the support assembly 160 close to the first end and housing the airflow sensing assembly 50 within the mounting groove 1611 of the support assembly 160. Furthermore, the mounting groove 1611 facilitates the mounting of the airflow sensing assembly 50.

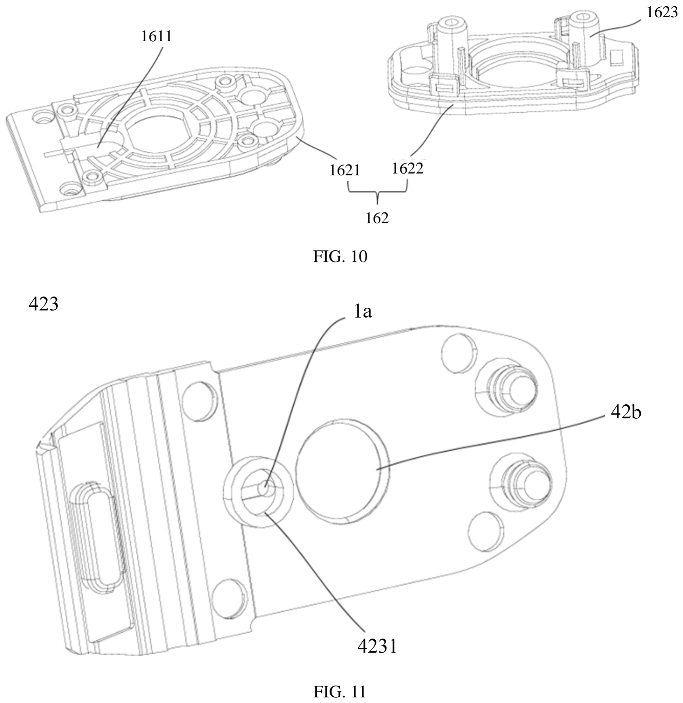

As shown in FIGS. 9 and 11, the airflow sensing assembly 50 includes an airflow sensing member 52 and a second circuit board 53. The airflow sensing member 52 is electrically connected to the second circuit board 53, and the second circuit board 53 is electrically connected to the first circuit board 62. A sealing groove 4231 protrudes from the side of the first sealing member 423 facing the first receiving cavity 42a. The sealing groove 4231 encloses the airflow sensing member 52, and the airflow channel 1a is located at the bottom of the sealing groove 4231.

The sealing groove 4231 arranged on the first sealing member 423 makes the environment of the airflow sensing member 52 more enclosed and stable, and the response speed of the airflow sensing member 52 is further improved.

As shown in FIG. 9, the support assembly 160 may include a battery compartment 161 and a support member 162.

The battery compartment 161 is disposed within the first receiving cavity 42a of the first main body portion 42. The airflow sensing assembly 50 and the first connecting portion 41 are both located outside the battery compartment 161 and at the same end of the battery compartment 161. A first circuit board 62 is located outside the battery compartment 161, between the outer wall of the battery compartment 161 and the inner wall of the outer bracket 163.

The support assembly 160 is disposed within the outer bracket 163 and divided the first receiving cavity 42a into a first mounting cavity 114 and a second mounting cavity 115. The battery compartment 161 and the inner wall of the outer bracket 163 define the first mounting cavity 114 and the second mounting cavity 115. The battery 61 is disposed in the first mounting cavity 114, and the first circuit board 62 is disposed in the second mounting cavity 115.

As an example, as shown in FIG. 9, two first mounting cavities 114 and one second mounting cavity 115 are arranged side-by-side within the first receiving cavity 42a.

The battery compartment 161 provides a space to accommodate the battery 61 and separates the battery 61 from the first circuit board 62, thus both the battery 61 and the first circuit board 62 are better protected

The support member 162 is connected to one end of the battery compartment 161. A mounting groove 1611 is provided on the side of the support member 162 facing away from the battery compartment 161, and the airflow sensing assembly 50 can be disposed in the mounting groove 1611.

For example, two first mounting cavities 114 can be provided, and two batteries 61 are provided. The support member 162 is connected to the battery compartment 161 and is located near the first end of the first main body portion 42. The mounting groove 1611 is located on the side of the support member 162 facing the first end.

The support member 162 facilitates the mounting of the airflow sensing assembly 50. The mounting groove 1611 acts as a limit to prevent the airflow sensing assembly 50 from becoming loose.

The power supply 100 also includes an electrode sheet 130. A side of the support member 162 facing the battery compartment 161 is provided with an abutment end 1623. The abutment end 1623 is used to abut the electrode sheet 130 against the battery 61 mounted in the battery compartment 161.

In the present application, the electrode sheet 130 and the battery 61 are not fixedly connected. The abutment end 1623 of the support member 162 allows the electrode sheet 130 to abut against the battery 61, which facilitates the mounting and removing of the electrode sheet 130 from the battery 61.

As shown in FIG. 10, the support member 162 includes a support plate 1621 and an abutment plate 1622, a mounting groove 1611 is disposed on the support plate 1621, and the abutment end 1623 is disposed on the abutment plate 1622. The support plate 1621 is connected to the side of the abutment plate 1622 away from the abutment end 1623. The support plate 1621 can support the first sealing member 423, allowing the first sealing member 423 to better contact the surface of the atomizer 200 to form a good seal.

As shown in FIG. 9, the first main body portion 42 may further include a fixing member 424. The fixing member 424 is disposed on the side of the first sealing member 423 away from the first receiving cavity 42a. The fixing member 424 is provided with a third through hole 424a that exposes the second through hole 42b.

The diameter of the third through hole 424a may be larger than the diameter of the first annular groove 40a, so as to expose the first annular groove 40a.

The fixing member 424 is used to fix the first sealing member 423 to the support member 162, so that the first sealing member 423 is clamped between the fixing member 424 and the support plate 1621.

As an example, the first sealing member 423 is made of silicone. After the power supply 100 is connected and mounted with the atomizer 200, the silicone first sealing member 423 can form a good seal. With the support of the fixing member 424 and the support member 162, the connection between the power supply 100 and the atomizer 200 can be stable.

The power supply 100 also includes a first elastic member 180. One end of the first elastic member 180 abuts against the abutment end 1623, and the other end of the first elastic member 180 abuts against the electrode sheet 130. The first elastic member 180 provides a spring force that pushes the electrode sheet 130 away from the abutment end 1623.

The first elastic member 180 helps to press the electrode sheet 130 firmly against the battery 61.

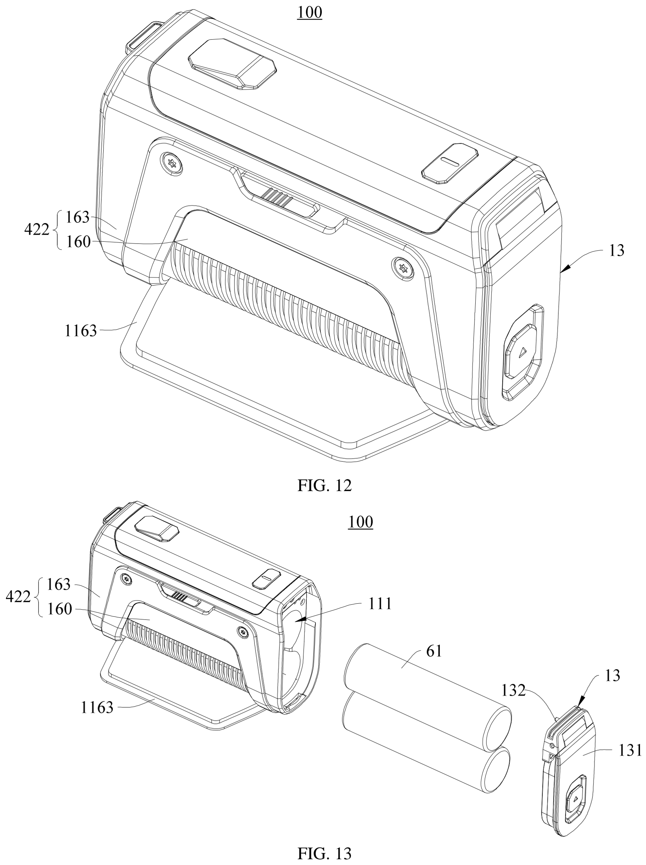

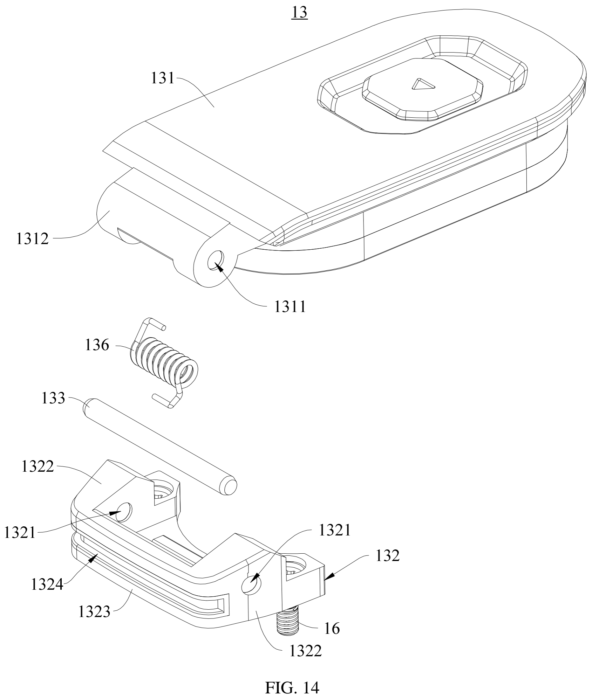

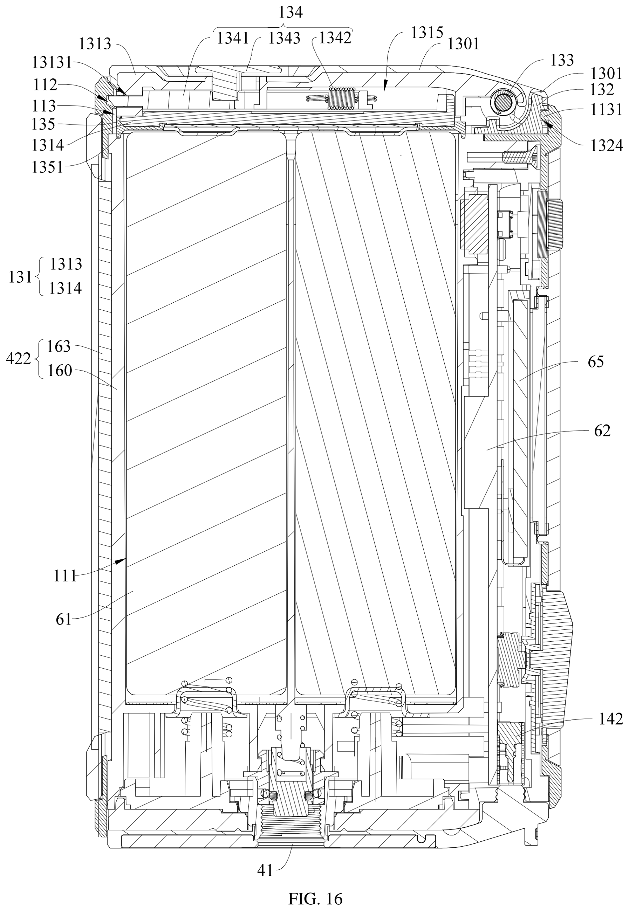

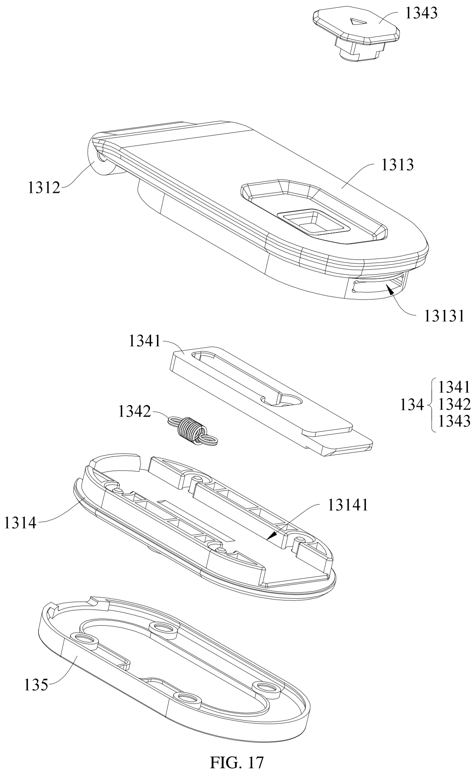

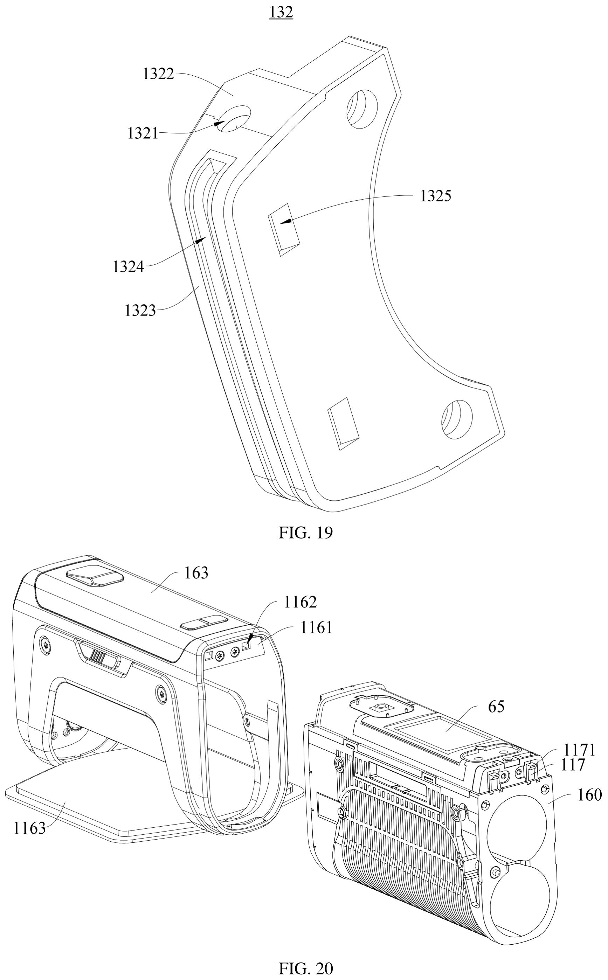

The following description, in conjunction with FIGS. 12-20, illustrates a power supply 100 provided in an embodiment of the present application.

As shown in FIGS.12-14, in some embodiments, the power supply 100 includes a support frame 422, a battery 61, and an end cap assembly 13. The support frame 422 is provided with a battery cavity 111; the battery 61 is housed within the battery cavity 111. The end cap assembly 13 includes a battery cover 131, a fixing seat 132, and a rotating shaft 133. The fixing seat 132 is connected to the support frame 422. The battery cover 131 is provided with a first rotating hole 1311 on one side, and the fixing seat 132 is provided with a second rotating hole 1321. The rotating shaft 133 passes through the first rotating hole 1311 and the second rotating hole 1321, allowing the battery cover 131 to rotate relative to the support frame 422 to close the opening of the battery cavity 111.

The support frame 422 can refer to the shell structure of the power supply 100. The hollow interior of the support frame 422 forms the battery cavity 111, and the battery 61 is mounted inside the battery cavity 111. One end of the battery cavity 111 is provided with an opening, and an end cap assembly 13 is mounted at the opening. The battery cavity 111 is opened and closed by flipping the battery cover 131 within the end cap assembly 13. The support frame 422 provides protection for the battery 61, improving the lifespan of the power supply 100. The support frame 422 can be a single integrated component or composed of multiple assembled components.

The battery 61 can refer to a component used for storing and releasing electrical energy. The battery 61 powers the electronic components inside the power supply 100 and can also power components such as the atomizer. The battery 61 can be a lithium battery, alkaline battery, lead-acid battery, etc.; the shape of the battery 61 can be various, such as cylindrical, square, etc. The number of batteries 61 can be two, three, or more. Multiple batteries 61 can be connected in series, parallel, or a hybrid configuration. A hybrid configuration means that multiple batteries 61 are connected in both series and parallel.

For example, two batteries 61 are provided, and the two batteries 61 are arranged side by side, which facilitates the electrical connection between the two batteries 61.

For example, the batteries 61 are 18650 steel-cased batteries.

The end cap assembly 13 refers to the component used to close and open the battery cavity 111.

The end cap assembly 13 includes a fixing seat 132, a battery cover 131, and a rotating shaft 133. The fixing seat 132 is connected to a support frame 422. The fixing seat 132 and the support frame 422 can be an integrated structure, or the fixing seat 132 and the support frame 422 can be separately formed and then assembled together.

The fixing seat 132 is used to hinge with the battery cover 131, so that the battery cover 131 can be flipped relative to the support frame 422, thereby opening and closing the battery cavity 111.

The battery cover 131 refers to a component that covers the opening of the battery cavity 111. The shape of the battery cover 131 is adapted to the shape of the opening of the battery cavity 111 to close the opening of the battery cavity 111. For example, the battery cover 131 resembles an elongated oval structure. The battery cover 131 can be a single integrated component or assembled from multiple components.

The rotating shaft 133 has a cylindrical structure. A first rotating hole 1311 is provided on one side of the battery cover 131, and a second rotating hole 1321 is provided on the fixing seat 132. The rotating shaft 133 passes through the first rotating hole 1311 and the second rotating hole 1321. The first rotating hole 1311 and the second rotating hole 1321 are arranged along the axis of the rotating shaft 133. Rotation of the rotating shaft 133 within the first rotating hole 1311 or the second rotating hole 1321 achieves the hinge connection between the battery cover 131 and the fixing seat 132, thereby enabling the battery cover 131 to flip relative to the support frame 422.

For example, the rotating shaft 133 is clearance-fitted with the first rotating hole 1311, and the rotating shaft 133 is interference-fitted with the second rotating hole 1321.

For example, the rotating shaft 133 is interference-fitted with the first rotating hole 1311, and the rotating shaft 133 is clearance-fitted with the second rotating hole 1321.

For example, the rotating shaft 133 is clearance-fitted with the first rotating hole 1311, and the rotating shaft 133 is clearance-fitted with the second rotating hole 1321.

In some related technologies, the support frame and the battery cover are hinged by a rotating shaft, and the battery cover flips relative to the support frame to open and close the battery cavity; the rotating shaft passes through the battery cover, and the end of the rotating shaft is pressed against the support frame by a lower pressure cover. The pressing and assembly clearance between the lower pressure cover and the support frame is larger, and the mounting accuracy of the rotating shaft is lower. When the battery cover is in the closed state, the end face of the battery cover relative to the support frame has a certain tilt angle, which leads to the risk of local failure of the seal between the end faces of the battery cover and the support frame.

In the embodiment of the power supply 100, a rotating shaft 133 passes through a first rotating hole 1311 in the battery cover 131 and a second rotating hole 1321 in the fixing seat 132. The battery cover 131 can rotate relative to the support frame 422, thereby opening and closing the battery cavity 111. The rotating shaft 133, passing through both the first rotating hole 1311 and the second rotating hole 1321, provides high assembly precision, improves the mounting accuracy of the rotating shaft 133, reduces the risk of tilting of the battery cover 131 relative to the support frame 422, and improves the sealing performance between the battery cover 131 and the support frame 422, thus enhancing the overall sealing performance of the power supply 100.

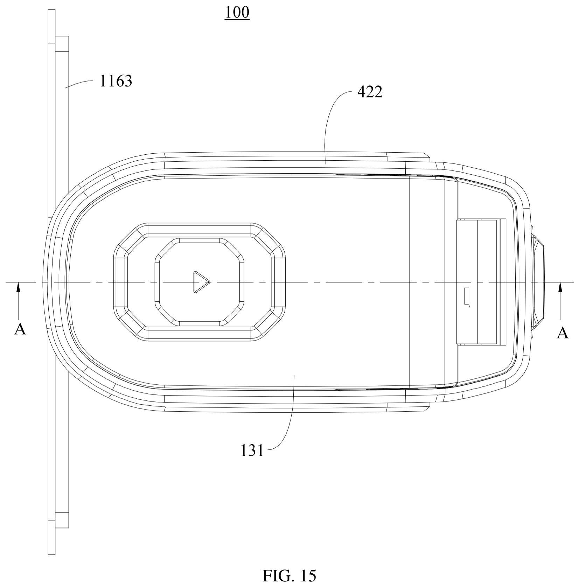

As shown in FIGS. 15-17, in some embodiments, the battery cover 131 is provided with a third connecting portion 1312, the first rotating hole 1311 passes through the third connecting portion 1312. The fixing seat 132 is provided with two fourth connecting portions 1322 spaced apart from each other, and the two fourth connecting portions 1322 are provided with a second rotating hole 1321, respectively. The third connecting portion 1312 is located between the two fourth connecting portions 1322, and both ends of the rotating shaft 133 pass through the second rotating holes 1321 of the two fourth connecting portions 1322. At least one second rotating hole 1321 passes through the corresponding fourth connecting portion 1322.

The third connecting portion 1312 may refer to the portion of the battery cover 131 with the first rotating hole 1311, which passes through the third connecting portion 1312 and is a through hole. The rotating shaft 133 passes through the first rotating hole 1311, with both ends extending out of the third connecting portion 1312.

For example, the third connecting portion 1312 is a cylindrical structure, and the first rotating hole 1311 is coaxially arranged with the third connecting portion 1312.

The fourth connecting portion 1322 can refer to the portion of the fixing seat 132 provided with the second rotating hole 1321. Two fourth connecting portions 1322 are provided, the third connecting portion 1312 is located between the two fourth connecting portions 1322. Both ends of the rotating shaft 133 are respectively inserted into the second rotating holes 1321 of the two fourth connecting portions 1322, the risk of the third connecting portion 1312 detaching from between the two fourth connecting portions 1322 is reduced, and the connection reliability between the fixing seat 132 and the battery cover 131 is improved, which are contributed to improved sealing performance of the power supply 100.

For example, the fixing seat 132 also includes a middle portion 1323, the middle portion 1323 connects between the two fourth connecting portions 1322 to connect the two fourth connecting portions 1322 into a whole. This increases the structural strength of the fixing seat 132 and facilitates fixing the fixing seat 132 to the support frame 422.

At least one second rotating hole 1321 penetrates the corresponding fourth connecting portion 1322. It is understood that in the two fourth connecting portions 1322, the second rotating hole 1321 of one fourth connecting portion 1322 is a through hole, and the second rotating hole 1321 of the another fourth connecting portion 1322 is a blind hole; or, the second rotating holes 1321 of both fourth connecting portions 1322 are through holes. The rotating shaft 133 can pass through the side of the fourth connecting portion 1322 with the through hole into the second rotating hole 1321 and the first rotating hole 1311. The assembly operation of the fixing seat 132, the rotating shaft 133, and the battery cover 131 is simple and convenient.

In some embodiments, the power supply 100 further includes a first circuit board 62, which is electrically connected to the battery 61. The first circuit board 62 is provided with an interface 142 for connecting to an external power source to charge the battery 61. The interface 142 can be a Type-C interface, a USB interface, etc.

In some embodiments, the first circuit board 62 includes a display panel 65, button switches, and other components to assist in the use of the power supply 100.

In some embodiments, the end cover assembly 13 further includes an electrical connector 137 for electrically connecting multiple batteries 61 and the first circuit board 62. The electrical connector 137 is mounted on the side of the battery cover 131 facing the battery cavity 111. When the battery cover 131 is closed onto the opening of the battery cavity 111, the electrical connector 137 directly contacts the multiple batteries 61 to achieve electrical connection. The material of the electrical connector 137 can be copper, aluminum, etc.

In some embodiments, the mounting base 132 and the battery cover 131 are covered with an adhesive layer 1301. The adhesive layer 1301 can be a silicone adhesive layer, a rubber adhesive layer, etc., to reduce damage such as bumps and knocks to the mounting base 132 and the battery cover 131, and improve the aesthetics of the mounting base 132 and the battery cover 131.

In some embodiments, the end cap assembly 13 further includes a locking mechanism 134, which locks the battery cover 131 to the support frame 422 when the battery cover 131 is in the closed state (see the state shown in FIG. 12).

It is understood that when the battery cover 131 is closed onto the opening of the battery cavity 111, the locking mechanism 134 can fix the battery cover 131 to the support frame 422. The locking of the locking mechanism 134 improves the reliability of the battery cover 131 and helps to improve the sealing performance of the battery cover 131.

For example, the locking mechanism 134 may be a screw, a pin, a snap-fit, or other similar component.

In some embodiments, the support frame 422 is provided with a locking groove 112. The locking mechanism 134 includes a locking tongue 1341 and a second elastic member 1342. The locking tongue 1341 is slidably connected to the battery cover 131. The second elastic member 1342 is connected between the support frame 422 and the locking tongue 1341. The second elastic member 1342 is used to push the locking tongue 1341 into the locking groove 112 to lock the battery cover 131 and the support frame 422.

The locking groove 112 may refer to a recessed structure on the inner side wall of the support frame 422.

The locking tongue 1341 is slidably connected to the battery cover 131. This means that when the battery cover 131 is closed onto the opening of the battery cavity 111, the locking tongue 1341 can slide relative to the battery cover 131 to extend into the locking groove 112, locking the battery cover 131 and the support frame 422. When the battery cavity 111 needs to be opened, the locking tongue 1341 slides in the opposite direction to exit the locking groove 112, thereby unlocking the battery cover 131 and the support frame 422, facilitating the opening of the battery cover 131.

In some embodiments, the battery cover 131 includes a third cover 1313 and a fourth cover 1314 that overlap each other to form a receiving cavity 1315. A third connecting portion 1312 is provided on one side of the third cover 1313, and a through hole 13131 is provided on the side wall of the other side of the third cover 1313. The locking tongue 1341 is located in the receiving cavity 1315, with one end of the locking tongue 1341 passing through the through hole 13131 and the other end of the locking tongue 1341 connected to one end of a second elastic member 1342. The other end of the second elastic member 1342 is connected to either the third cover 1313 or the fourth cover 1314. When the battery cavity 111 is in the open state, the second elastic member 1342 pushes the end of the locking tongue 1341 out of the through hole 13131. When the battery cover 131 is rotated to almost close the opening of the battery cavity 111, the locking tongue 1341 is pulled to compress the second elastic member 1342, causing the locking tongue 1341 to retract into the battery cover 131. After the battery cover 131 is rotated to the correct position and the opening of the battery cavity 111 is closed, the second elastic member 1342 releases its elastic force to push the locking tongue 1341 into the locking groove 112, thereby locking the battery cover 131 and the support frame 422. When the battery cavity 111 needs to be opened, the locking tongue 1341 is pushed to compress the second elastic member 1342, and the locking tongue 1341 exits the locking groove 112, thereby releasing the locking of the battery cover 131 and the support frame 422. Then, the battery cover 131 is flipped over, thereby opening the battery cavity 111.

In some embodiments, the second elastic member 1342 is a spring, one end of the spring is hooked onto the locking tongue 1341 and another end of the spring is hooked onto the battery cover 131.

In some embodiments, the locking mechanism 134 further includes a sliding button 1343, which passes through the third cover 1313 and connects to the locking tongue 1341. The sliding button 1343 is pushed to cause the locking tongue 1341 to slide, thereby locking and unlocking the locking mechanism 134. The sliding button 1343 facilitates locking and unlocking of the locking mechanism 134.

In some embodiments, the fourth cover 1314 is provided with a guide groove 13141, and the locking tongue 1341 is located within the guide groove 13141. The limiting effect of the groove wall of the guide groove 13141 on the locking tongue 1341 allows the locking tongue 1341 to slide stably relative to the battery cover 131, so as to accurately enter and exit the locking groove 112.

In some embodiments, the end cap assembly 13 further includes a third elastic member 136, which is sleeved on the rotating shaft 133. Both ends of the third elastic member 136 are connected to the battery cover 131 and the fixing seat 132, respectively. After the locking tongue 1341 exits the locking groove 112, the third elastic member 136 can automatically rotate the battery cover 131, thereby opening the battery cover 131. The third elastic member 136 can be a torsion spring, etc.

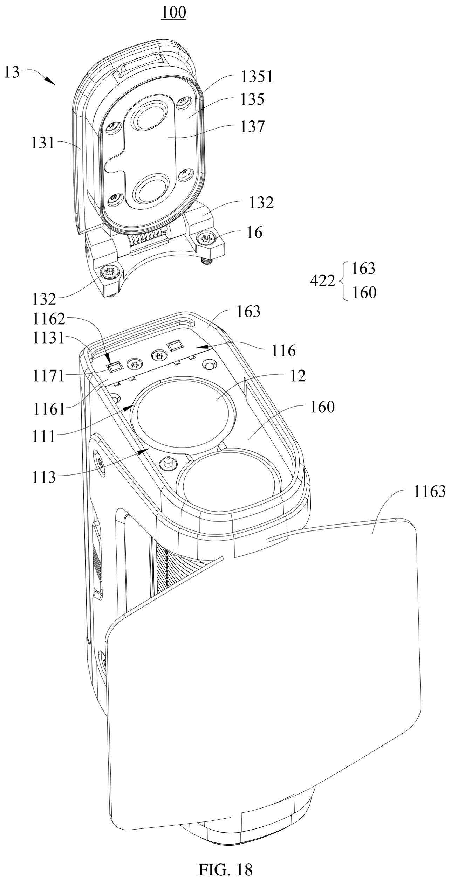

As shown in FIGS. 18-20, in some embodiments, the fixing seat 132 is engaged with the support frame 422.

"Engaged connection" refers to connecting two components together through elastic deformation or mechanical interlocking. There are various types of "engaged connections," such as elastic buckles, dovetail grooves, threaded engagement, and rotary engagement.

The mounting base 132 and the support frame 422 are engaged, and the connection between the mounting base 132 and the support frame 422 is simple, and the assembly efficiency of the power supply 100 is improved. Furthermore, the support frame 422 and the mounting base 132 are separate structures, which allows the support frame 422 and the end cap assembly 13 to form two independent modules and enables modular assembly, the assembly efficiency of the power supply 100 is further improved while reducing the manufacturing cost of the power supply 100.

In some embodiments, the support frame 422 is further provided with a second receiving cavity 113 communicating with the battery cavity 111, a stepped surface 116 is formed between the second receiving cavity 113 and the battery cavity 111, at least a portion of the end cap assembly 13 is received in the second receiving cavity 113, the inner side wall of the second receiving cavity 113 is provided with a first engaging protrusion 1131, and the fixing seat 132 is provided with a first engagement groove 1324 for engaging with the first engaging protrusion 1131; or, the inner side wall of the second receiving cavity 113 is provided with a first engagement groove 1324, and the fixing seat 132 is provided with a first engaging protrusion 1131 for engaging with the first engagement groove 1324.

The internal cavity of the support frame 422 is divided into two parts: a second receiving cavity 113 and a battery cavity 111. The second receiving cavity 113 accommodates the end cap assembly 13. When the battery cover 131 is closed onto the opening of the battery cavity 111, part or all of the end cap assembly 13 is accommodated within the battery cavity 111.

The battery cavity 111 may include multiple cavities, which may or may not be communicated.

For example, two battery cavities 111 are arranged side by side; the ends of both battery cavities 111 on the same side are connected to the second receiving cavity 113.

The second receiving cavity 113 has a different size than the battery cavity 111, thus forming a stepped surface, i.e., a stepped surface 116, inside the support frame 422. The opening of the battery cavity 111 is formed on the stepped surface 116, and the battery cover 131 abuts against the stepped surface 116, thereby sealing the battery cavity 111.

The inner wall of the second receiving cavity 113 is provided with a first engaging protrusion 1131, and the side of the fixing seat 132 is provided with a first engagement groove 1324; alternatively, the inner wall of the second receiving cavity 113 is provided with a first engagement groove 1324, and the side of the fixing seat 132 is provided with a first engaging protrusion 1131. The fixing seat 132 is located within the second receiving cavity 113. The first engaging protrusion 1131 engages with the first engagement groove 1324, thus achieving engagement between the support frame 422 and the fixing seat 132, and the risk of the end cap assembly 13 detaching from the second receiving cavity 113 is reduced. Furthermore, during assembly, pushing the fixing seat 132 towards the side wall of the second receiving cavity 113 engages the first engaging protrusion 1131 with the first engagement groove. This simple engagement operation facilitates the assembly of the end cap assembly 13 and the support frame 422.

In some embodiments, the support frame 422 includes a spring tongue 117, one end of the spring tongue 117 is provided with a second engaging protrusion 1171 protruding from the stepped surface 116. The fixing seat 132 is provided with a second engagement groove 1325 for engaging with the second engaging protrusion 1171.

The support frame 422 is provided with a spring tongue 117, and the end of the spring tongue 117 is provided with a second engaging protrusion 1171 protruding from the stepped surface 116. Thus, during the pushing of the fixing seat 132 towards the first engagement groove 1324, the fixing seat 132 presses the second engaging protrusion 1171 under the stepped surface 116. After the first engaging protrusion 1131 engages in the first engagement groove 1324, the second engaging protrusion 1171 engages in the second engagement groove 1325, thereby restricting the movement of the fixing seat 132 on the stepped surface 116. The fixing seat 132 can be relatively stably fixed to the support frame 422.

In some embodiments, the support frame 422 includes a support assembly 160 and an outer bracket 163. A battery cavity 111 is formed inside the support assembly 160, and the outer bracket 163 is sleeved outside the support assembly 160 to protect the battery 61. The outer bracket 163 is sleeved outside the support assembly 160, and the outer bracket 163 protrudes from the end of the support assembly 160 to form a second receiving cavity 113. The another end of the spring tongue 117 is mounted on the side of the support assembly 160. A partition 1161 is provided inside the outer bracket 163. The surface of the partition 1161 and the end face of the support assembly 160 together form a stepped surface 116. The partition 1161 covers a part of the end face of the support assembly 160 to shield the spring tongue 117 and protect the spring tongue 117. The partition 1161 is provided with an avoidance hole 1162. The second engaging protrusion 1171 is received in the avoidance hole 1162 and extends out of the avoidance hole 1162. The support frame 422 employs a multi-layer shell structure, which helps improve the structural reliability of the power supply 100.

In some embodiments, a skin cover 1163 may be provided on the outside of the support frame 422 and covering the outer surface of the support frame 422. Exemplarily, the skin cover 1163 may be formed of materials such as leather, artificial leather, fabric, rubber, or silicone. In the related drawings provided in the embodiment of the present application, the skin cover 1163 is unfolded to facilitate the illustration of the structure of the support frame 422.

In some embodiments, the end cap assembly 13 further includes a second sealing member 135, which is mounted on the battery cover 131. The second sealing member 135 is used to clamp between the stepped surface 116 and the battery cover 131. The side of the second sealing member 135 facing the stepped surface 116 is provided with a sealing protrusion 1351, which abuts against the stepped surface 116 and surrounds the periphery of the opening of the battery cavity 111.

The second sealing element 135 can be a sealing ring. The second sealing element 135 is sleeved outside the battery cover 131. When the battery cover 131 is closed onto the support frame 422, the second sealing element 135 is clamped between the stepped surface 116 and the battery cover 131. The side of the second sealing element 135 facing the stepped surface 116 is provided with a sealing protrusion 1351, and the sealing protrusion 1351 is arranged around the opening of the battery cavity 111. Simultaneously, the sealing protrusion 1351 is compressed and deformed by the stepped surface 116, allowing the second sealing element 135 to fit tightly against the stepped surface 116, and the sealing performance of the end cover assembly 13 and the support frame 422 is improved.

The second sealing element 135 is arranged around the electrical connector 137 to improve the contact stability between the electrical connector 137 and the battery 61.

In some embodiments, the fixing seat 132 is fixed to the support frame 422 by a fastener 16.

The fastener 16 can be a screw, bolt, or other component, and the mounting base 132 is fixed to the stepped surface 116 by the fastener 16. For example, two fourth connecting portions 1322 are fixed to the stepped surface 116 by the fastener 16.

The mounting base 132 is connected to the support frame 422 through a combination of a snap-fit and the fastener 16, the connection reliability between the mounting base 132 and the support frame 422 is improved, the structural strength and stability of the power supply 100 is enhanced, and the sealing performance of the end cap assembly 13 and the support frame 422 is improved.

In some embodiments, the aerosol generating device 1000 includes an atomizer and the aforementioned power supply 100, which provides electrical energy to the atomizer.

The atomizer can refer to a component used to atomize an aerosol matrix into an aerosol.

The atomizer and the power supply 100 can be detachably connected through threads or snap-fits, or the atomizer and the power supply 100 can be fixedly connected.

The atomizer is electrically connected to the power supply 100. The first circuit board 62 can deliver electrical energy from the battery 61 to the heating element of the atomizer. The heating element heats the aerosol matrix within the atomizer, thereby generating an aerosol that can be inhaled by the user.

In some examples, the heating element of the atomizer is wired to the power supply 100. For example, the support frame 422 is provided with a first connecting portion 41, which is electrically connected to a first circuit board 62. The atomizer is snapped into the first connecting portion 41, thus achieving a fixed connection between the atomizer and the power supply 100. Simultaneously, the first connecting portion 41 electrically connects the heating element within the atomizer to the first circuit board 62. The first circuit board 62 can supply electrical energy from the battery 61 to the heating element, which heats the aerosol matrix within the atomizer, thereby generating an aerosol that can be inhaled by the user. The first connecting portion 41 can be a threaded interface, etc.

In some examples, the heating element of the atomizer can be wirelessly connected to the power supply 100, and the battery 61 wirelessly powers the heating element.

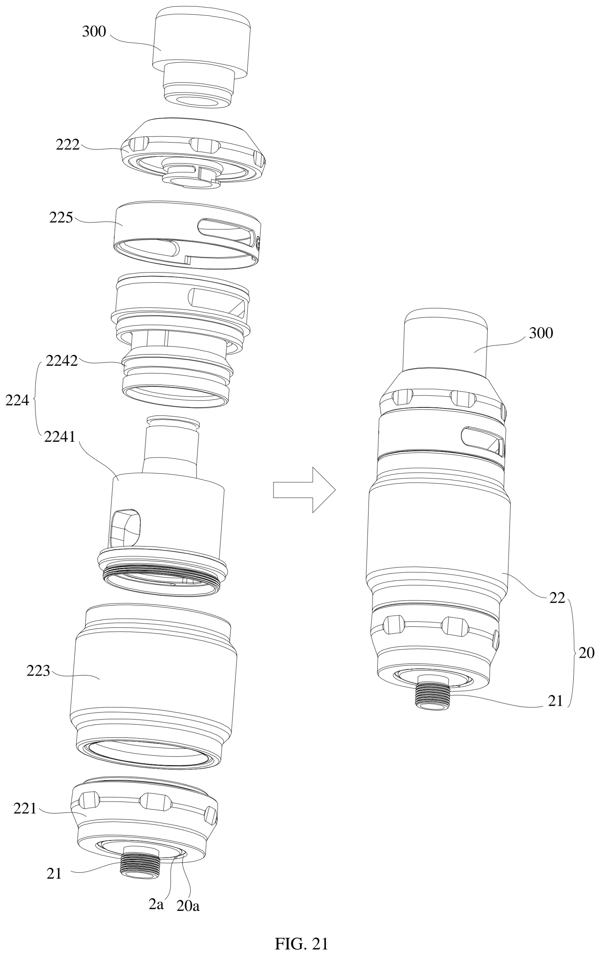

FIG. 21 is a schematic structural diagram of a housing assembly of an atomizer according to an embodiment of the present application. As shown in FIG. 21, the housing assembly 20 of the atomizer 200 includes a second connecting portion 21 and a second main body portion 22. The second main body portion 22 is used to accommodate the atomizing assembly of the atomizer 200.

The second connecting portion 21 is connected to the second main body portion 22, and the second connecting portion 21 is used for rotatable connection with the power supply 100.

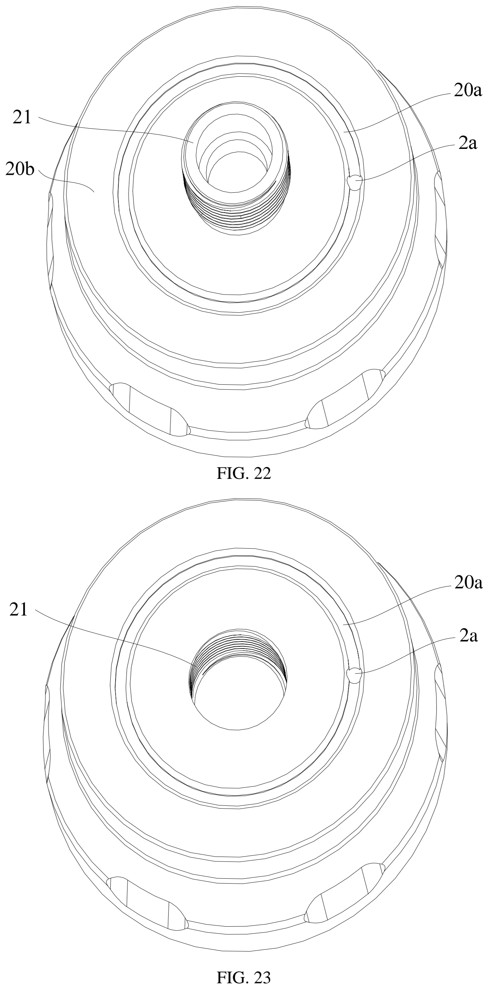

FIG. 22 is a partial structural schematic diagram of the housing assembly of an atomizer according to an embodiment of the present application. As shown in FIG. 22, the second main body portion 22 is provided with a sensing air passage 2a. One end of the sensing air passage 2a is connected to the airflow sensing assembly 50 through the airflow channel 1a of the power supply 100, and another end of the sensing air passage 2a is located inside the second main body portion 22 and is connected to the nozzle 300.

By providing the sensing air passage 2a in the housing assembly 20 of the atomizer 200, when the user inhales during the use of the aerosol generating device 1000, the airflow in the airflow channel 1a of the housing assembly 40 of the power supply 100 flows to the sensing air passage 2a, the airflow sensing assembly 50 inside the power supply 100 is then triggered, thus activating the aerosol generating device 1000.

In this example, the outer surface of the second main body portion 22 is further provided with a second annular groove 20a, which surrounds the second connecting portion 21. For example, the second annular groove 20a can be coaxially arranged with the second connecting portion 21. The second annular groove 20a is used to mate with the outer surface of the power supply 100 to form an annular cavity communicating with the airflow channel 1a of the power supply 100.

One end of the sensing air passage 2a is located within the second annular groove 20a, and another end of the sensing air passage 2a is located inside the second main body portion 22. The another end of the sensing air passage 2a is used to communicate with the nozzle 300.

By configuring the housing assembly 20 of the atomizer 200 to include the second connecting portion 21 and the second main body portion 22, and by providing the second annular groove 20a and the sensing air passage 2a in the second main body portion 22, with one end of the sensing air passage 2a located within the second annular groove 20a, when the atomizer 200 is connected to the power supply 100 through the second connecting portion 21, the second annular groove 20a can form an annular cavity with the outer surface of the power supply 100. This annular cavity communicates with the airflow channel 1a of the power supply 100, thus allowing the sensing air passage 2a to communicate with the airflow channel 1a of the power supply 100 through the annular cavity. The second annular groove 20a surrounds the second connecting portion 21. When the atomizer 200 is rotatably connected to the power supply 100 through the second connecting portion 21, even if the relative rotation angle between the atomizer 200 and the power supply 100 differs during each connection process (ranging from 0° to 360°), the annular cavity formed by the second annular groove 20a and the outer surface of the power supply 100 will always maintain communication between the sensing air passage 2a and the airflow channel 1a. Users do not need to pay attention to the relative rotation angle between the atomizer 200 and the power supply 100 when connecting the atomizer 200 and the power supply 100, so that the connection is easier and the aerosol generating device 1000 is more convenient to use.

As shown in FIG. 21, in some examples, the second main body portion 22 may include a first cover 221, a second cover 222, and a liquid reservoir housing 223. The first cover 221 is located at one end of the liquid reservoir housing 223, and the second cover 222 is located at another end of the liquid reservoir housing 223. The first cover 221, the liquid reservoir housing 223, and the second cover 222 are detachably connected to facilitate the assembly of the atomizer 200.

As shown in FIG. 21, the second cover 222 can be used to connect the nozzle 300.

In some examples, the housing assembly 20 of the atomizer 200 may also include the nozzle 300, which can be connected to the second cover 222.

As an example, the nozzle 300 can be detachably connected to the second cover 222 for easy replacement.

In other examples, the nozzle 300 may also be fixedly connected to the second cover 222. For example, the nozzle 300 and the second cover 222 are integrally formed.

As shown in FIG. 21, the second connecting portion 21 can be connected to the first cover 221, and the second annular groove 20a may be located on the side of the first cover 221 away from the liquid reservoir housing 223.

The second connecting portion 21 and the first cover 221 can be fixedly connected. As an example, the second connecting portion 21 and the first cover 221 can be integrally formed. In some other possible implementations, the second connecting portion 21 and the first cover 221 may also be two independent components.

In some examples, the second connecting portion 21 has threads for connecting to the power supply 100.

Using a threaded connection to connect to the power supply 100 makes the connection between the atomizer 200 and the power supply 100 more secure.

The second connecting portion 21 can be cylindrical; for example, it can be a cylindrical tubular structure. The threads can be located on the outer or inner wall of the second connecting portion 21.

As an example, as shown in FIG. 22, the second connecting portion 21 protrudes from the outer surface of the first cover 221, that is, the second connecting portion 21 is located on the side of the first cover 221 away from the liquid reservoir housing 223. The second connecting portion 21 is provided with external threads. When connecting to the power supply 100, the second connecting portion 21 can be inserted into the power supply 100 and connected to the power supply 100 through threads.

FIG. 23 is a schematic diagram of a first cover according to an embodiment of the present application. As shown in FIG. 23, in some possible implementations, the second connecting portion 21 is located on the side of the first cover 221 near the liquid reservoir housing 223, and the second connecting portion 21 is provided with internal threads. When connected to the power supply 100, the second connecting portion 21 can be fitted over a portion of the power supply 100 and connected to the power supply 100 through threads.

As shown in FIG. 22, the outer surface of the second main body portion 22 is provided with a second planar region 20b, and a second annular groove 20a is located in the second planar region 20b.

In this example, the second planar region 20b includes the surface of the first cover 221 away from the liquid reservoir housing 223. The second planar region 20b is annular and surrounds the second connecting portion 21. For example, the second annular groove 20a can be coaxial with the second planar region 20b.

The surface of the first cover 221 away from the liquid reservoir housing 223 is made flat, which allows the first cover 221 to better fit the outer surface of the power supply 100 when the atomizer 200 and the power supply 100 are connected. This creates a more airtight annular cavity with the second annular groove 20a on the outer surface of the power supply 100, enabling more accurate triggering of the airflow sensing assembly in the power supply 100 during the use of the aerosol generating device 1000.

As shown in FIG. 22, the second annular groove 20a is circular. The diameter of the second annular groove 20a can be 10mm to 20mm.

The diameter of the second annular groove 20a can refer to one of the following: the diameter of the inner wall of the second annular groove 20a, the diameter of the outer wall of the second annular groove 20a, or the average of the diameters of the inner and outer walls of the second annular groove 20a. The inner wall of the second annular groove 20a is the side wall of the second annular groove 20a close to the second connecting portion 21, and the outer wall is the side wall away from the second connecting portion 21.

The larger the diameter of the second annular groove 20a, the longer the inner and outer edges of the second annular groove 20a. When the atomizer 200 is connected to the power supply 100, the higher the risk of leakage in the formed annular cavity. Setting the diameter of the second annular groove 20a to 10mm~20mm reduces the risk of leakage in the annular cavity and provides sufficient space inside the second annular groove 20a to accommodate the second connecting portion 21, ensuring the dimensions of the second annular groove 20a meet design requirements and preventing any limitation on the structural strength of the second connecting portion 21.

In some examples, the diameter of the second annular groove 20a can be 13mm~17mm. For example, the diameter of the second annular groove 20a can be 15mm.

In some examples, the difference between the annular width of the second annular groove 20a and the diameter of the sensing air passage 2a does not exceed 1mm.

The annular width of the second annular groove 20a refers to the difference between the radius of its outer side wall and the radius of its inner side wall. The diameter of the sensing air passage 2a can refer to the diameter of the end of the sensing air passage 2a located within the second annular groove 20a, i.e., the diameter of the inlet of the sensing air passage 2a.

The annular width of the second annular groove 20a is set to be approximately the same as the diameter of the sensing air passage 2a, within 1 mm, can prevent the volume of the annular cavity formed when the atomizer 200 is connected to the power supply 100 from being too large. With a constant diameter of the second annular groove 20a, a larger annular width results in a larger volume of the annular cavity formed when the atomizer 200 is connected to the power supply 100, which may affect the sensitivity of the airflow sensing assembly.

Exemplarily, the annular width of the second annular groove 20a can be the same as the diameter of the sensing air passage 2a.

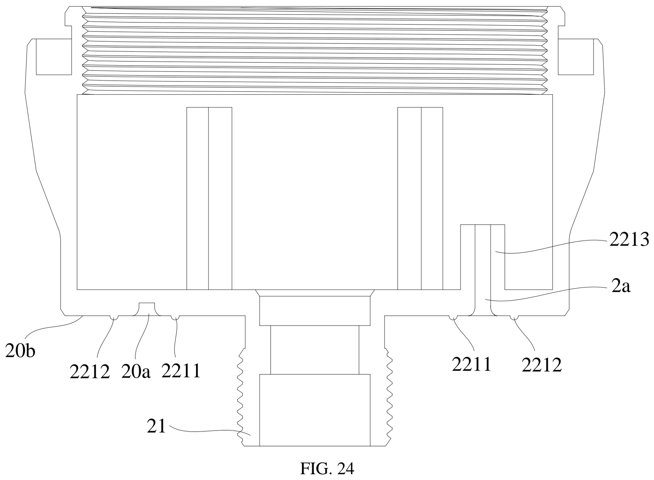

FIG. 24 is a partial cross-sectional view of a second main body portion provided in an embodiment of the present application, showing a cross-section of the first cover 221. As shown in FIG. 24, the second main body portion 22 may further include a third sealing rib 2211 and a fourth sealing rib 2212.

The third sealing rib 2211 is located in the second planar region 20b and is arranged around the second connecting portion 21. The third sealing rib 2211 is located inside the second annular groove 20a. The fourth sealing rib 2212 is located in the second planar region 20b and is arranged around the second connecting portion 21. The fourth sealing rib 2212 is located outside the second annular groove 20a.

When the atomizer 200 and the power supply 100 are connected, the third sealing rib 2211 and the fourth sealing rib 2212 can respectively compress the outer surface of the power supply 100, thereby improving the airtightness of the inner and outer sides of the second annular groove 20a, to form a more airtight annular cavity between the second annular groove 20a and the outer surface of the power supply 100.

In some other possible implementations, the surface of the first cover 221 may also be provided with only the third sealing rib 2211 or only the fourth sealing rib 2212 to reduce manufacturing costs.

As shown in FIG. 24, the first cover 221 is provided with a protrusion post 2213 on the side near the liquid reservoir housing 223. The end of the sensing air passage 2a away from the second annular groove 20a is located at the end of the protrusion post 2213.

The sensing air passage 2a penetrates the first cover 221. The inlet of the sensing air passage 2a is located on the outer side of the first cover 221, i.e., the side away from the liquid reservoir housing 223, and the outlet of the sensing air passage 2a is located on the inner side of the first cover 221, i.e., the side near the liquid reservoir housing 223. During use, the aerosol matrix or condensate formed inside the atomizer 200 may adhere to the inner side of the first cover 221. By providing the protrusion post 2213 on the inner side of the first cover 221 and arranging the outlet of the sensing air passage 2a at the end of the protrusion post 2213, the risk of the aerosol matrix or condensate clogging the sensing air passage 2a, or even leaking to the outside of the atomizer 200 through the sensing air passage 2a, can be reduced.

For example, the height of the protrusion post 2213 can be 1mm to 5mm, for example, 2mm or 3mm.

As shown in FIG. 21, the housing assembly of the atomizer 200 may further include a bracket 224, a portion of which is located within the liquid reservoir housing 223, and another portion of which is located between the liquid reservoir housing 223 and the second cover 222.

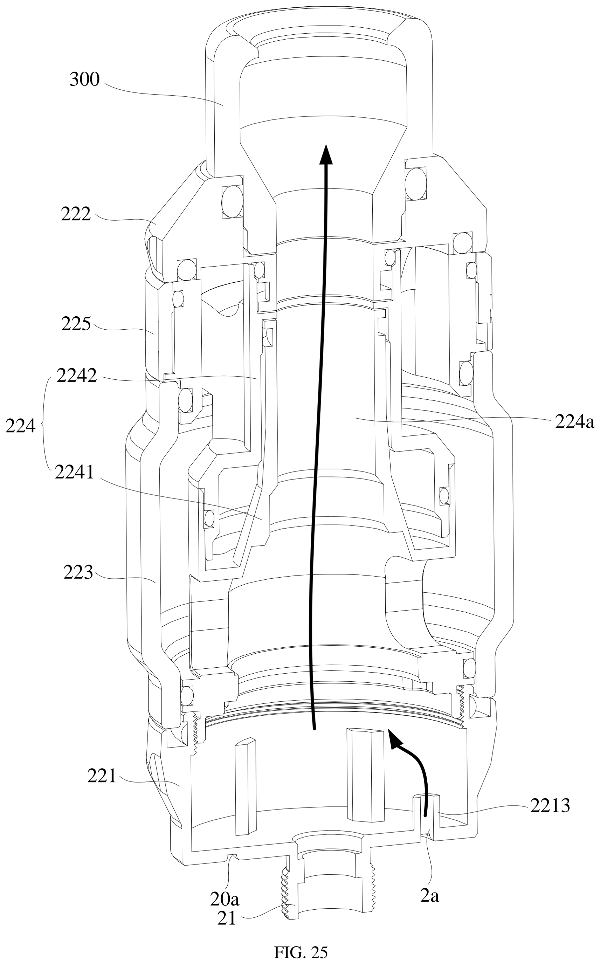

FIG. 25 is a schematic diagram of the internal structure of a housing assembly of an atomizer according to an embodiment of the present application. FIG. 25 schematically shows the approximate flow direction of the airflow inside the housing assembly. As shown in FIG. 25, the bracket 224 is provided with an atomizing channel 224a. The inlet of the atomizing channel 224a is close to the first cover 221, that is, the distance from the inlet of the atomizing channel 224a to the first cover 221 is less than the distance from the outlet of the atomizing channel 224a to the first cover 221. The inlet of the atomizing channel 224a communicates with the sensing air passage 2a. The outlet of the atomizing channel 224a is close to the second cover 222, that is, the distance from the outlet of the atomizing channel 224a to the second cover 222 is less than the distance from the inlet of the atomizing channel 224a to the second cover 222.

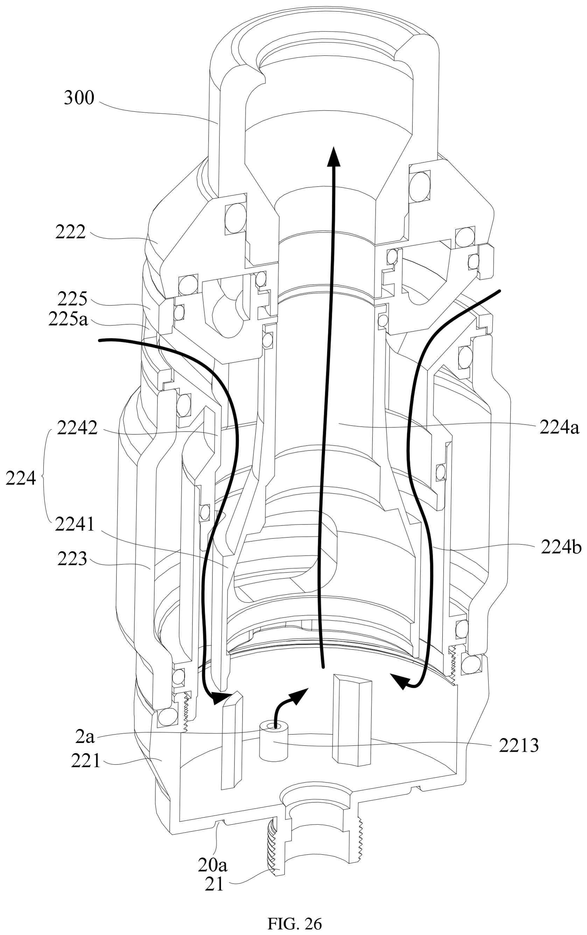

FIG. 26 is a schematic diagram of the internal structure of a housing assembly of an atomizer according to an embodiment of the present application. FIG. 26 schematically shows the approximate flow direction of the airflow inside the housing assembly. The cross-section shown in FIG. 26 is perpendicular to the cross-section shown in FIG. 25. As shown in FIG. 26, the bracket 224 is further provided with a main air passage 224b. The inlet of the main air passage 224b is located on the outer surface of the portion of the bracket 224 exposed between the liquid reservoir housing 223 and the second cover 222, and the outlet of the main air passage 224b communicates with the inlet of the atomizing channel 224a.

The main air passage 224b is the main channel through which outside air enters the atomizer 200 during the inhalation process. The atomizing channel 224a is used to accommodate the atomizing assembly 30 and is also the site for aerosol formation. During inhalation, outside air enters the main air passage 224b and then flows into the inlet of the atomizing channel 224a. After mixing with the aerosol generated by the atomizing assembly 30 in the atomizing channel 224a, it exits from the outlet of the atomizing channel 224a and finally exits the atomizer 200 through the nozzle 300.

In this example, a portion of the bracket 224 is exposed between the liquid reservoir housing 223 and the second cover 222. By arranging the inlet of the main air passage 224b on the outer surface of the exposed portion of the bracket 224, the inlet of the main air passage 224b is closer to the second cover 222. The airflow entering the atomizer 200 from the inlet of the main air passage 224b undergoes a reversal, lengthening the airflow path. Since the atomizer 200 generates heat during operation (e.g., the atomizing assembly 30 generates heat), the longer airflow path allows for more thorough heating, enabling the airflow temperature to rise to a suitable level.

The bracket 224 may provide with multiple main air channels 224b, which can be distributed around the atomizing channel 224a, for example, arranged at equal angular intervals around the atomizing channel 224a. As an example, the bracket 224 may provide with two main air channels 224b, which are arranged symmetrically at the center. Arranging multiple main air channels 224b helps to increase the air intake of the atomizer 200. Arranging multiple main air channels 224b around the atomizing channel 224a makes the airflow entering the atomizing channel 224a more uniform and symmetrical, which helps to improve the atomization effect.

In some examples, the bracket 224 may include a first bracket 2241 and a second bracket 2242 detachably connected to each other, both of the first bracket 2241 and the second bracket 2242 are cylindrical. The first bracket 2241 forms the atomizing channel 224a and is located in the liquid reservoir housing 223. The end of the first bracket 2241 near the first cover 221 is connected to the liquid reservoir housing 223. The second bracket 2242 is sleeved on the end of the first bracket 2241 near the second cover 222. A portion of the second bracket 2242 protrudes between the liquid reservoir housing 223 and the second cover 222, and is connected to the liquid reservoir housing 223 and the second cover 222, respectively. The second bracket 2242 and the first bracket 2241 together form the main air passage 224b, with the inlet of the main air passage 224b located in the exposed portion of the second bracket 2242.

The structure of the bracket 224 is relatively complex. By configuring the first bracket 2241 and the second bracket 2242 detachable, the first bracket 2241 and the second bracket 2242 can be manufactured separately and then assembled, reducing processing difficulty.

The portion of the bracket 224 located inside the liquid reservoir housing 223 forms a liquid storage tank with the liquid reservoir housing 223, the liquid storage tank is used to store the aerosol matrix. The side wall of the first bracket 2241 may also have a hollow structure, such as holes, openings, or gaps. This hollow structure connects the liquid storage tank and the atomizing channel 224a, allowing the aerosol matrix in the liquid storage tank to enter the atomizing channel 224a and moisten the atomizing assembly 30.

As shown in FIG. 26, the housing assembly of the atomizer 200 may also include an air regulating ring 225. The air regulating ring 225 can be sleeved onto the portion of the second bracket 2242 exposed between the liquid storage housing 223 and the second cover 222, and can rotate relative to the second bracket 2242. The air regulating ring 225 may have a flow regulating hole 225a. By rotating the air regulating ring 225, the area of the flow regulating hole 225a facing the inlet of the main air passage 224b is changed, thereby altering the air intake of the main air passage 224b during inhalation. When not in use, the flow regulating hole 225a can be completely offset from the inlet of the main air passage 224b, and the air regulating ring 225 can be used to block the inlet of the main air passage 224b, preventing foreign objects from entering the main air passage 224b.

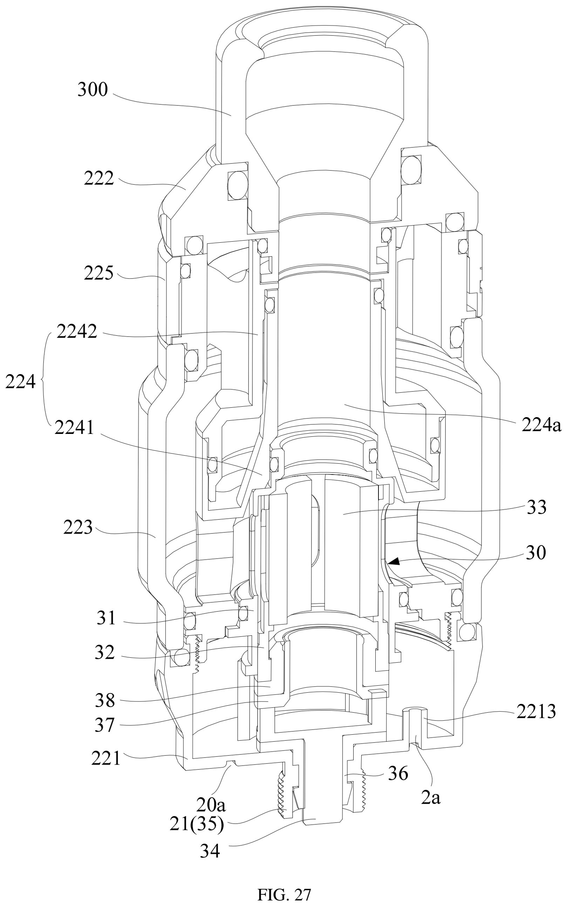

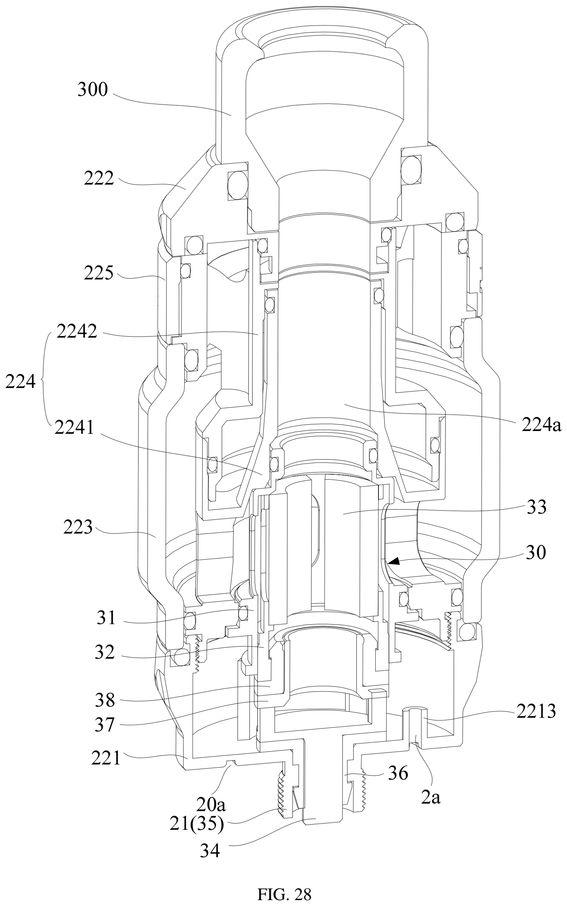

FIGS. 27 and 28 are schematic diagrams of the internal structure of an atomizer provided in an embodiment of the present application. The cross-sections shown in FIGS. 27 and 28 are perpendicular to each other. As shown in FIGS. 27 and 28, the atomizer 200 includes an atomizing assembly 30 and any of the housing assemblies shown in FIGS. 21 to 26. The atomizing assembly 30 is located within the second main body portion 22.

When the atomizer 200 is connected to the power supply 100, even if the relative rotation angle between the atomizer 200 and the power supply 100 is different when the atomizer 200 and the power supply 100 are each time, the second annular groove 20a is opposite to the outlet of the airflow channel 1a of the power supply 100, and the annular cavity formed by the second annular groove 20a and the outer surface of the power supply 100 can always connect the sensing air passage 2a and the airflow channel 1a. Users do not need to pay attention to the relative rotation angle between the atomizer 200 and the power supply 100, so that it is easier to connect the atomizer 200 and the power supply 100 and thus making the aerosol generating device 1000 more convenient to use.

As shown in FIG. 28, the atomizing assembly 30 is located in the atomizing channel 224a. The atomizing assembly 30 may include an outer cover 31, a tubular bracket 32, a liquid guiding member 33, and a heating element. The outer cover 31 is sleeved on the tubular bracket 32. Both the outer cover 31 and the side walls of the tubular bracket 32 have hollow structures, such as holes, openings, and gaps, to allow the aerosol matrix to enter the inner side of the tubular bracket 32. The tubular bracket 32 is mounted in the atomizing channel 224a. The liquid guiding member 33 is located in the tubular bracket 32 and is used to absorb the aerosol matrix in the storage tank. The heating element may be located inside the liquid guiding member 33 and is used to heat the aerosol matrix, thereby forming an aerosol.

The material and structure of the heating element are not limited, as long as it can generate heat. For example, the heating element may include at least one of a heating mesh, a heating film, a heating wire, and a heating plate.

The heating element may also have at least two pins for easy power supply.

The atomizer 200 may further include a first electrode 34, a second electrode 35, and a first insulating pad 36. Both the first electrode 34 and the second electrode 35 may be located within the second connecting portion 21. The first insulating pad 36 is positioned between the first electrode 34 and the second electrode 35. The first electrode 34 and the second electrode 35 are respectively connected to the heating element.

As an example, the first electrode 34 can be a positive electrode, and the second electrode 35 can be a negative electrode.

After the atomizer 200 is connected to the power supply 100, the first electrode 34 and the second electrode 35 are electrically connected to the power supply 100 to power the atomizing assembly 30.

Exemplarily, the first electrode 34 can be cylindrical and coaxially arranged with the second connecting portion 21. The first insulating pad 36 can be sleeved on the first electrode 34.

The second electrode 35 can be located on the inner wall of the second connecting portion 21. Exemplarily, the second electrode 35 can be a conductive layer formed on the inner wall of the second connecting portion 21, for example, a metal plating.

In some possible implementations, the second connecting portion 21 can be a conductive member, for example, a metal member, and the second electrode 35 can have the same structure as the second connecting portion 21, that is, the second connecting portion 21 is reused as the second electrode 35.

As shown in FIG. 28, the atomizer 200 may further include a transition electrode 37 and a second insulating pad 38, both of the transition electrode 37 and the second insulating pad 38 are cylindrical. The second insulating pad 38 can be sleeved on the transition electrode 37 and is inserted into the end of the tubular bracket 32, separating the tubular bracket 32 and the transition electrode 37. The first electrode 34 can be located on the side of the transition electrode 37 away from the tubular bracket 32 and is in contact with the transition electrode 37. The transition electrode 37 is used to connect to a heating element. Exemplarily, at least one pin of the heating element can be connected to the transition electrode 37, and at least another pin of the heating element can be connected to the second electrode 35.

The tubular bracket 32 can be made of metal, which can improve the structural strength of the tubular bracket 32 and also facilitate the heat conduction of the atomizing assembly 30.

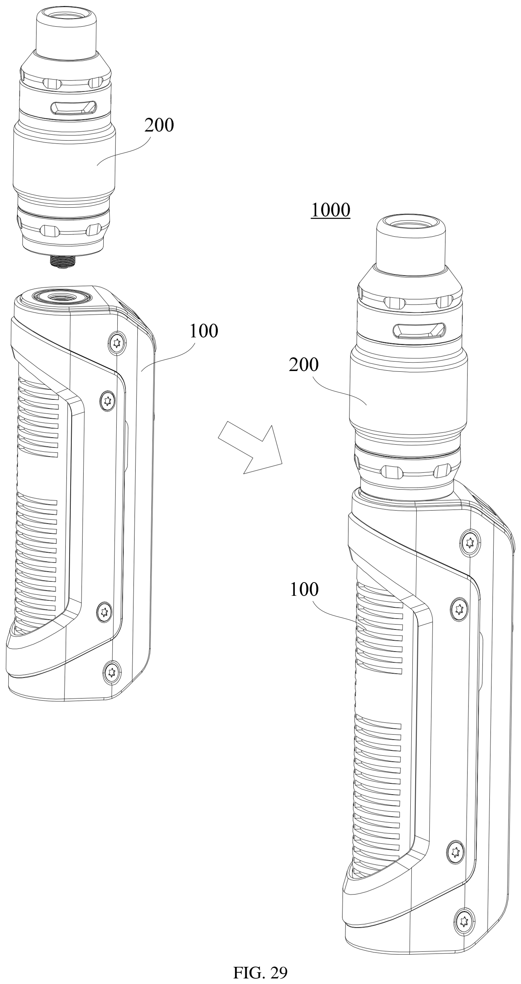

FIG. 29 is a schematic structural diagram of an aerosol generating device provided in an embodiment of the present application. As shown in FIG. 29, the aerosol generating device 1000 includes an atomizer 200 and a power supply 100 for supplying power to the atomizer 200.

The atomizer 200 can be any of the aforementioned atomizers; or, the power supply 100 can be any of the aforementioned power supplies.

In some examples, the atomizer 200 is the atomizer shown in FIG. 27 or FIG. 28, and the power supply 100 is the power supply 100 shown in FIG. 7, FIG. 8, or FIG. 12. The diameter of the second annular groove 20a can be the same as the diameter of the first annular groove 40a, and the annular width of the second annular groove 20a can also be the same as the annular width of the first annular groove 40a, so that after the atomizer 200 is connected to the power supply 100, the second annular groove 20a and the first annular groove 40a together form an annular cavity, through which the airflow channel 1a communicates with the sensing airflow channel 2a.

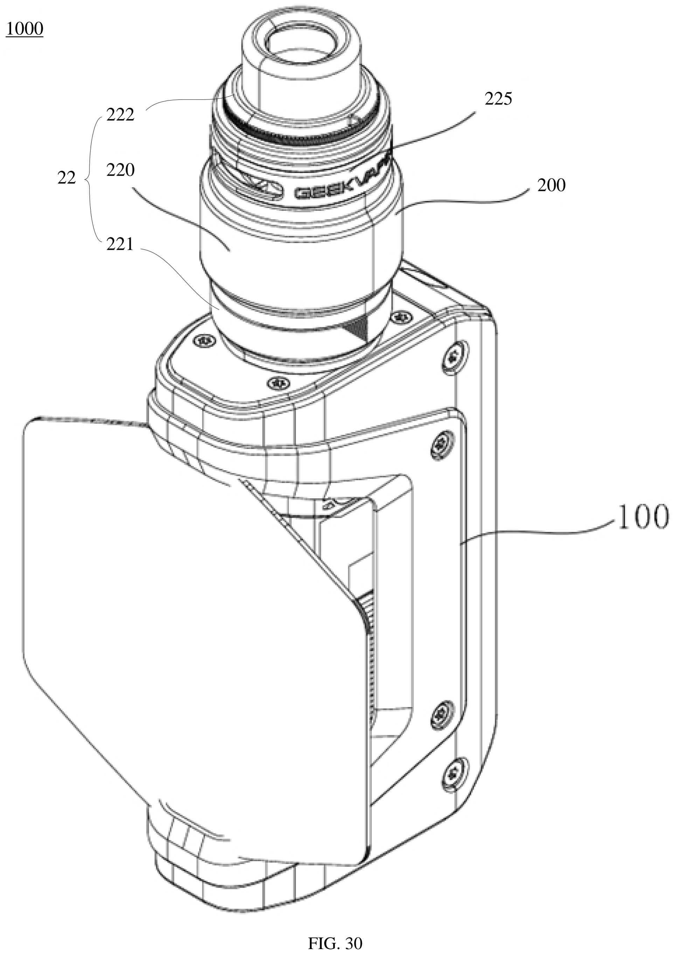

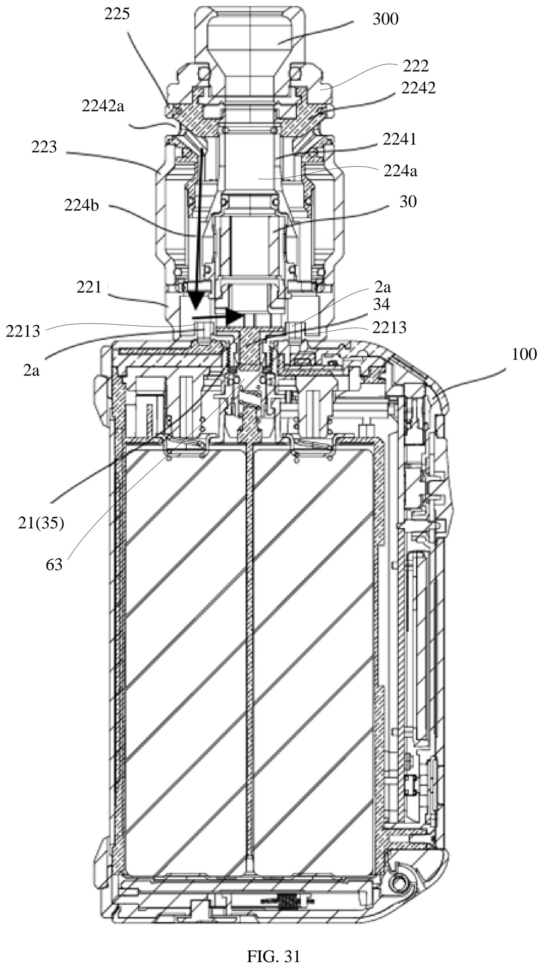

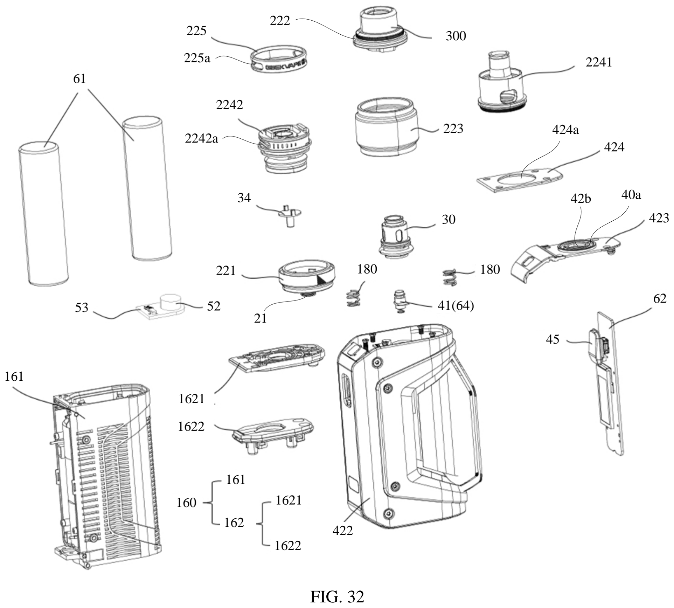

FIG. 30 is a structural schematic diagram of an aerosol generating device provided in an embodiment of the present application. FIG. 31 is a cross-sectional view of the aerosol generating device 1000 shown in FIG. 30. FIG. 32 is an exploded structural schematic diagram of the aerosol generating device shown in FIG. 30. As shown in FIGS. 30 and 32, in some examples, the housing assembly of the atomizer 200 includes a second connecting portion 21 and a second main body portion 22. The second main body portion 22 includes a first cover 221, a second cover 222, and an atomizing chamber 220.

The second connecting portion 21 is disposed at the bottom of the first cover 221. The second connecting portion 21 can be a threaded structure having threads for connecting to the power supply 100. The second connecting portion 21 can be used for threaded connection with the first connecting portion 41.

The bottom of the first cover 221 is provided with a sensing air passage 2a, which communicates with the airflow passage 1a of the power supply 100. The atomizing chamber 220 is connected to the first cover 221. ,The atomizing channel 224a and the main airflow channel 224b are formed inside the atomizing chamber 220. FIG. 31 schematically shows the approximate airflow direction within the main airflow channel 224b with arrows. One end of the main airflow channel 224b communicates with the atomizing channel 224a, and another end of the main airflow channel 224b communicates with the outside. The end of the main airflow channel 224b communicating with the atomizing channel 224a can extend into the first cover 221. The negative pressure airflow of the main airflow channel 224b can pass through the sensing airflow channel 2a. The atomizing assembly 30 is disposed in the atomizing channel 224a and is used to generate aerosol.

Exemplarily, the diameter of the sensing airflow channel 2a can be 1 mm.

As shown in FIG. 31, the side of the sensing airflow channel 2a facing away from the power supply 100 protrudes from the bottom of the first cover 221.

As shown in FIG.31, the atomizer 200 also includes a nozzle 300, and the atomizing chamber 220 may include a liquid reservoir housing 223, a first bracket 2241, a second bracket 2242, and an airflow regulating ring 225. The liquid reservoir housing 223 is connected to the first cover 221. The end of the liquid reservoir housing 223 facing away from the first cover 221 is provided with a mounting opening, and the second bracket 2242 is mounted in the mounting opening. The first bracket 2241 is disposed inside the liquid reservoir housing 223 and is connected to the second bracket 2242. The first bracket 2241 and the second bracket 2242 define an atomizing channel 224a and a main airflow channel 224b, and the atomizing assembly 30 is disposed in the atomizing channel 224a. The second bracket 2242 is provided with an air inlet 2242a that protrudes from the liquid reservoir housing 223. An air regulating ring 225 is sleeved onto the second bracket 2242 and is rotatable on the second bracket 2242 to expose or close the air inlet 2242a. Before using the aerosol generating device 1000, the air regulating ring 225 can be rotated to open the air inlet 2242a; when not using the aerosol generating device 1000, the air regulating ring 225 can be rotated to close the air inlet 2242a.

As shown in FIG.31, the first electrode 34 of the atomizer 200 is disposed within and passes through the first cover 221. One end of the first electrode 34 is electrically connected to the pin of the atomizing assembly 30, and another end of the first electrode 34 is electrically connected to the third electrode 63 of the power supply 100.

The atomizing assembly 30 can employ a smaller resistance, so as to increase its heating power. Combined with a high-output battery 61 of the power supply 100, this improves the overall mist output of the aerosol generating device 1000.

The structures of the atomizer 200 and power supply 100 in the aerosol generating device 1000 shown in FIGS. 29-32 are merely examples. In other possible implementations, the structures of the atomizer 200 and power supply 100 of the aerosol generating device 1000 may differ from those shown.

Any features mentioned in the housing assemblies of different power supplies 100, different atomizer 200, or different atomizers 200 can be combined arbitrarily without conflict.

The above-described embodiments are only used to illustrate the technical solutions of the present application, and are not intended to limit them. Although the present application has been described in detail with reference to the foregoing embodiments, those skilled in the art should understand that modifications can still be made to the technical solutions described in the foregoing embodiments, or equivalent substitutions can be made to some of the technical features. Such modifications or substitutions do not cause the essence of the corresponding technical solutions to deviate from the spirit and scope of the technical solutions of the embodiments of the present application, and should all be included within the protection scope of the present application.

## Claims

1. A housing assembly (40) of a power supply (100), **characterized by** comprising a first connecting portion (41) and a first main body portion (42), wherein a first receiving cavity (42a) is formed inside the first main body portion (42), the first receiving cavity (42a) is configured to receive a power supply assembly (60) and an airflow sensing assembly (50);
the first connecting portion (41) is connected to the first main body portion (42), and the first connecting portion (41) is configured to rotatably connect to an atomizer (200);
the first main body portion (42) is provided with an airflow channel (1a), one end of the airflow channel (1a) is configured to communicate with a sensing airflow channel (2a) of the atomizer (200), and another end of the airflow channel (1a) is located inside the first main body portion (42) and is configured to communicate with the airflow sensing assembly (50).

2. The housing assembly (40) according to claim 1, **characterized in that** the first main body portion (42) is further provided with a first annular groove (40a), the first annular groove (40a) is located on an end face of one end of the first main body portion (42), the first annular groove (40a) surrounds the first connecting portion (41), and one end of the airflow channel (1a) is located within the first annular groove (40a); the first annular groove (40a) is configured to cooperate with an outer surface of the atomizer (200) to form an annular cavity, and the annular cavity communicates with the airflow channel (1a) and the sensing air passage (2a) of the atomizer (200).

3. The housing assembly (40) according to claim 2, **characterized in that** an outer surface of the first main body portion (42) is provided with a first planar region (40b), and the first annular groove (40a) is located within the first planar region (40b).

4. The housing assembly (40) according to claim 3, **characterized in that** the first main body portion (42) further comprises at least one of the following:
a first sealing rib (4211), located in the first planar region (40b), arranged surrounding the first connecting portion (41), and located inside the first annular groove (40a); and
a second sealing rib (4212), located in the first planar region (40b), arranged surrounding the first connecting portion (41), and located outside the first annular groove (40a).

5. The housing assembly (40) according to any one of claims 1 to 4, **characterized in that** the first connecting portion (41) is provided with threads configured for connecting the atomizer (200).

6. The housing assembly (40) according to any one of claims 2 to 4, **characterized in that** a difference between an annular width of the first annular groove (40a) and a diameter of the airflow channel (1a) does not exceed 1 mm.

7. The housing assembly (40) according to any one of claims 2 to 4, **characterized in that** a diameter of the first annular groove (40a) is ranged from 10 mm to 20 mm.

8. The housing assembly (40) according to any one of claims 2 to 4, **characterized in that** the first main body portion (42) comprises a support frame (422) and a cover plate (421), the cover plate (421) is located on an outer surface of the support frame (422), and the first annular groove (40a) is located on a side of the cover plate (421) away from the support frame (422).

9. The housing assembly (40) according to claim 8, **characterized in that** the first connecting portion (41) is connected to the support frame (422), and the cover plate (421) is provided with a first through hole (421a) exposing the first connecting portion (41).

10. The housing assembly (40) according to any one of claims 1 to 4, **characterized in that** the first main body portion (42) comprises a support frame (422) and a first sealing member (423), one side of the support frame (422) is an opening, the first sealing member (423) is connected to the support frame (422) at the opening, the first connecting portion (41) is connected to the support frame (422), the first sealing member (423) is provided with a second through hole (42b) exposing the first connecting portion (41), the airflow channel (1a) is located on the first sealing member (423), and the first sealing member (423) is configured to seal a connection between the second through hole (42b) and the atomizer (200), and to seal a connection between the airflow channel (1a) and the atomizer (200).

11. The housing assembly (40) according to claim 10, **characterized in that** the first main body portion (42) further comprises a fixing member (424), the fixing member (424) is disposed on a side of the first sealing member (423) away from the first receiving cavity (42a), the fixing member (424) is provided with a third through hole (424a) exposing the second through hole (42b).

12. The housing assembly (40) according to claim 11, **characterized in that** a side of the first sealing member (423) facing the first receiving cavity (42a) is protruded with a sealing groove (4231), the sealing groove (4231) is configured for accommodating an airflow sensing member (52) in the airflow sensing assembly (50), and the airflow channel (1a) is disposed at a bottom of the sealing groove (4231).

13. A power supply (100), **characterized by** comprising a power supply assembly (60), an airflow sensing assembly (50), and the housing assembly (40) of the power supply (100) according to any one of claims 1 to 12; wherein the power supply assembly (60) and the airflow sensing assembly (50) are located in a first receiving cavity (42a) of a first main body portion (42), and the airflow sensing assembly (50) communicates with an airflow channel (1a).

14. The power supply (100) according to claim 13, **characterized in that** the power supply assembly (60) comprises a first circuit board (62) and a button switch (621), wherein the airflow sensing assembly (50) and the button switch (621) are electrically connected to the first circuit board (62), and the airflow sensing assembly (50) and the button switch (621) are respectively configured to control an atomizer (200) to work.

15. The power supply (100) according to claim 14, **characterized in that** the first main body portion (42) comprises a support assembly (160) and an outer bracket (163); the outer bracket (163) is sleeved on the support assembly (160), the support assembly (160) comprises a battery compartment (161), the airflow sensing assembly (50) and the first connecting portion (41) are both located outside the battery compartment (161) and located at a same end of the battery compartment (161), the first circuit board (62) is located outside the battery compartment (161) and is located between an outer side wall of the battery compartment (161) and an inner side wall of the outer bracket (163).

16. The power supply (100) according to claim 15, **characterized in that** the power supply (100) further comprises a support member (162), the support member (162) is connected to one end of the battery compartment (161), and a side of the support member (162) away from the battery compartment (161) is provided with a mounting groove (1611), and the airflow sensing assembly (50) is disposed in the mounting groove (1611).

17. The power supply (100) according to claim 16, **characterized in that** the power supply (100) further comprises an electrode sheet (130), and a side of the support member (162) facing the battery compartment (161) is provided with an abutment end (1623), the abutment end (1623) is configured to abut the electrode sheet (130) against a battery (61) mounted in the battery compartment (161).

18. The power supply (100) according to claim 17, **characterized in that** the power supply (100) further comprises a first elastic member (180), one end of the first elastic member (180) abuts against the abutment end (1623), and another end of the first elastic member (180) abuts against the electrode sheet (130), the first elastic member (180) applies a spring force configured for pushing the electrode sheet (130) away from the abutment end (1623).

19. A housing assembly (20) of an atomizer (200), **characterized by** comprising a second connecting portion (21) and a second main body portion (22), wherein the second main body portion (22) is configured for accommodating an atomizing assembly (30);
the second connecting portion (21) is connected to the second main body portion (22) and is configured to rotatably connect to a power source (100); and
the second main body portion (22) is provided with a sensing air passage (2a), one end of the sensing air passage (2a) is configured to communicate with an airflow sensing assembly (50) through an airflow channel (1a) of the power source (100), and another end of the sensing air passage (2a) is located inside the second main body portion (22) and is communicated with a nozzle (300).

20. The housing assembly (20) according to claim 19, **characterized in that** the second main body portion (22) is further provided with a second annular groove (20a), the second annular groove (20a) is located on an end face of one end of the second main body portion (22), the second annular groove (20a) surrounds the second connecting portion (21), one end of the sensing air passage (2a) is located in the second annular groove (20a), the second annular groove (20a) is configured to cooperate with an outer surface of the power supply (100) to form an annular cavity, and the annular cavity communicates the sensing air passage (2a) and the airflow passage (1a) of the power supply (100).

21. The housing assembly (20) according to claim 20, **characterized in that** an outer surface of the second main body portion (22) is provided with a second planar region (20b), and the second annular groove (20a) is located in the second planar region (20b).

22. The housing assembly (20) according to claim 21, **characterized in that** the second main body portion (22) further comprises at least one of the following:
a third sealing rib (2211), located in the second planar region (20b), arranged surrounding the second connecting portion (21), and located inside the second annular groove (20a); and
a fourth sealing rib (2212), located in the second planar region (20b), arranged surrounding the second connecting portion (21), and located outside the second annular groove (20a).

23. The housing assembly (20) according to any one of claims 19-22, **characterized in that** the second connecting portion (21) is provided with threads configured for connecting the power supply (100).

24. The housing assembly (20) according to any one of claims 20 to 22, **characterized in that** a difference between an annular width of the second annular groove (20a) and a diameter of the sensing air passage (2a) does not exceed 1 mm.

25. The housing assembly (20) according to any one of claims 20 to 22, **characterized in that** a diameter of the second annular groove (20a) is ranged from 10 mm to 20 mm.

26. The housing assembly (20) according to any one of claims 20 to 22, **characterized in that** the second main body portion (22) comprises a first cover (221), a second cover (222), and a liquid reservoir housing (223), wherein the first cover (221) is located at one end of the liquid reservoir housing (223), and the second cover (222) is located at another end of the liquid reservoir housing (223); the second annular groove (20a) is located on a side of the first cover (221) away from the liquid reservoir housing (223), and the second cover (222) is configured to connect a nozzle (300).

27. The housing assembly (20) according to claim 26, **characterized in that** a side of the first cover (221) adjacent to the liquid reservoir housing (223) is provided with a protrusion post (2213), and an end of the sensing air passage (2a) away from the second annular groove (20a) is located at an end portion of the protrusion post (2213).

28. The housing assembly (20) according to claim 26, **characterized in that** the housing assembly (20) further comprises a bracket (224), a portion of the bracket (224) is located within the liquid reservoir housing (223), and another portion of the bracket (224) is located between the liquid reservoir housing (223) and the second cover (222);
the bracket (224) is provided with an atomizing channel (224a) and a main air passage (224b), an inlet of the atomizing channel (224a) is arranged adjacent to the first cover (221) and communicated with the sensing air passage (2a), and an outlet of the atomizing channel (224a) is arranged adjacent to the second cover (222); and
an inlet of the main air passage (224b) is located on an outer surface of a portion of the bracket (224) exposed between the liquid reservoir housing (223) and the second cover (222), and an outlet of the main air passage (224b) communicates with the inlet of the atomizing channel (224a).

29. An atomizer (200), comprising an atomizing assembly (30) and a housing assembly (20) of the atomizer (200) according to any one of claims 19 to 28, wherein the atomizing assembly (30) is located within a second main body portion (22).

30. An aerosol generating device (1000), comprising a power supply (100) and an atomizer (200), wherein the power supply (100) is configured to supply power to the atomizer (200); the aerosol generating device (1000) satisfies at least one of the following:
the power supply (100) is the power supply (100) according to any one of claims 13 to 18; and
the atomizer (200) is the atomizer (200) according to claim 29.
